# EUROPEAN PATENT APPLICATION

(11) **EP 4 485 891 A1**
(43) Date of publication of application: **01.01.2025**
(21) Application number: 22934938.6
(22) Date of filing: 20.12.2022
(51) Int. Cl.: H04L 45/48

(54) **PATH CALCULATION METHOD, APPARATUS AND SYSTEM**

(30) Priority: 02.04.2022 CN 202210351934
(71) Applicant: Huawei Technologies Co., Ltd., Shenzhen, Guangdong 518129 (CN)
(72) Inventor: MIAO, Haifeng, Shenzhen, Guangdong 518129 (CN); XU, Guoqi, Shenzhen, Guangdong 518129 (CN); HU, Zhibo, Shenzhen, Guangdong 518129 (CN); YAN, Gang, Shenzhen, Guangdong 518129 (CN)
(74) Representative: Körber, Martin Hans
(86) International application number: PCT/CN2022/140487
(87) International publication number: WO 2023/185123

(57) **Abstract**

This application discloses a path calculation method and apparatus, and a system, and belongs to the field of network technologies. The method is applied to a first network device in an interior gateway protocol (interior gateway protocol, IGP). The method includes: The first network device receives a first IGP packet sent by a second network device, where the first IGP packet includes energy consumption information of a network object in the IGP network, and the energy consumption information of the network object includes energy consumption of the network object. The first network device determines an optimal path from the first network device to a first egress device based on the energy consumption information of the network object in the IGP network. In this application, energy consumption of the optimal path calculated by the network device is low. This helps reduce energy consumption of service transmission and meets a requirement of a green and energy-saving network.

## Description

This application claims priority to Chinese Patent Application No. 202210351934.4, filed on April 2, 2022 and entitled "PATH CALCULATION METHOD AND APPARATUS, AND SYSTEM", which is incorporated herein by reference in its entirety.

### TECHNICAL FIELD

This application relates to the field of network technologies, and in particular, to a path calculation method and apparatus, and a system.

### BACKGROUND

To implement service transmission, a network device may calculate an optimal path based on an interior gateway protocol (interior gateway protocol, IGP). In a conventional IGP, the network device usually calculates the optimal path based on a cost (cost) of a link. However, energy consumption of the optimal path calculated based on a conventional IGP technology may be high, and consequently, energy consumption of the service transmission is high.

### SUMMARY

This application provides a path calculation method and apparatus, and a system. The technical solutions are as follows.

According to a first aspect, a path calculation method is provided, and is applied to a first network device in an IGP network. The method includes: The first network device receives a first IGP packet sent by a second network device, where the first IGP packet includes energy consumption information of a network object in the IGP network, and the energy consumption information of the network object includes energy consumption of the network object. The first network device determines an optimal path from the first network device to a first egress device based on the energy consumption information of the network object in the IGP network, where the first egress device is an egress network device in the IGP network.

According to the technical solutions provided in this application, the first network device determines the optimal path from the first network device to the first egress device based on the energy consumption information of the network object in the IGP network. Therefore, energy consumption of the optimal path determined by the first network device is low. This helps reduce energy consumption of service transmission and meets a requirement of a green and energy-saving network.

Optionally, the network object includes at least one of a network device in the IGP network and a link in the IGP network. For example, the network object includes the network device in the IGP network and the link in the IGP network.

According to the technical solutions provided in this application, in a process in which the first network device determines the optimal path from the first network device to the first egress device, energy consumption of the network device in the IGP network and/or energy consumption of the link in the IGP network are/is considered. Therefore, energy consumption of a network device on the optimal path determined by the first network device and/or energy consumption of a link included in the optimal path are/is low, so that the energy consumption of the optimal path is low. This helps reduce the energy consumption of the service transmission and meets the requirement of the green and energy-saving network.

Optionally, energy consumption of the network device in the IGP network is determined based on at least one of the following factors: a processing component in the network device, a temperature adjustment component in the network device, and an environment in which the network device is located. Energy consumption of the link in the IGP network is determined based on at least one of the following factors: a network processor (network processor, NP) chip corresponding to the link, an optical-electrical conversion chip corresponding to the link, and a serial interface corresponding to the link. The processing component in the network device, the temperature adjustment component in the network device, and the environment in which the network device is located may all be referred to as device energy consumption factors. The NP chip corresponding to the link, the optical-electrical conversion chip corresponding to the link, and the serial interface corresponding to the link may all be referred to as link energy consumption factors.

Optionally, the energy consumption information of the network object further includes status information of the network object, where the status information of the network object indicates a status of the network object, and the status of the network object includes a sleep state or a wake-up state. Usually, energy consumption of a network object in the sleep state is low, and energy consumption of a network object in the wake-up state is high.

Optionally, that the first network device determines an optimal path from the first network device to a first egress device based on the energy consumption information of the network object in the IGP network includes: The first network device determines the optimal path from the first network device to the first egress device based on the energy consumption information of the network object in the IGP network, a first flexible algorithm, and a network topology of the IGP network. Three elements of the first flexible algorithm may include a calculation type, a metric type, and constraints.

Optionally, that the first network device determines the optimal path from the first network device to the first egress device based on the energy consumption information of the network object in the IGP network, a first flexible algorithm, and a network topology of the IGP network includes: The first network device determines a pruned network topology based on the energy consumption information of the network object in the IGP network, a metric type of the first flexible algorithm, constraints of the first flexible algorithm, and the network topology of the IGP network. The first network device determines the optimal path from the first network device to the first egress device based on energy consumption information of a network object in the pruned network topology, a calculation type of the first flexible algorithm, the metric type of the first flexible algorithm, and the pruned network topology. The pruned network topology may be a logical topology. The pruned network topology is a network topology obtained by pruning the network topology of the IGP network based on the first flexible algorithm. Therefore, the pruned network topology may also be referred to as a logical topology corresponding to the first flexible algorithm.

Optionally, the first flexible algorithm meets at least one of the following: The metric type of the first flexible algorithm includes an energy consumption metric; and the constraints of the first flexible algorithm include an energy consumption constraint condition.

According to the technical solutions provided in this application, the metric type of the first flexible algorithm includes the energy consumption metric, and/or the constraints of the first flexible algorithm include the energy consumption constraint condition. Therefore, in a process of pruning the network topology of the IGP network based on the energy consumption information of the network object in the IGP network, the metric type of the first flexible algorithm, and the constraints of the first flexible algorithm, the first network device may prune a network object that does not meet the energy consumption metric, and/or prune a network object that does not meet the energy consumption constraint condition, and the network object in the pruned network topology obtained by the first network device meets the energy consumption metric and/or the energy consumption constraint condition. Therefore, the energy consumption of the optimal path that is from the first network device to the first egress device and that is determined by the first network device based on the energy consumption information of the network object in the pruned network topology, the calculation type of the first flexible algorithm, the metric type of the first flexible algorithm, and the pruned network topology is low. This helps reduce the energy consumption of the service transmission and meets the requirement of the green and energy-saving network.

Optionally, the energy consumption constraint condition includes at least one of a device energy consumption constraint condition and a link energy consumption constraint condition. The device energy consumption constraint condition includes: excluding a network device that does not meet a device energy consumption condition. The link energy consumption constraint condition includes: excluding a link that does not meet a link energy consumption condition.

According to the technical solutions provided in this application, because the energy consumption constraint condition includes at least one of the device energy consumption constraint condition and the link energy consumption constraint condition, in the process of pruning the network topology of the IGP network based on the energy consumption information of the network object in the IGP network, the metric type of the first flexible algorithm, and the constraints of the first flexible algorithm, the first network device may prune a network device that does not meet the device energy consumption constraint condition, and/or prune a link that does not meet the link energy consumption constraint condition, and a network device in the pruned network topology obtained by the first network device meets the device energy consumption constraint condition, and/or a link in the pruned network topology obtained by the first network device meets the link energy consumption constraint condition.

Optionally, the device energy consumption constraint condition includes at least one of the following: excluding a network device whose energy consumption is greater than a device energy consumption threshold, and excluding a network device in the sleep state. The link energy consumption constraint condition includes at least one of the following: excluding a link whose energy consumption is greater than a link energy consumption threshold, and excluding a link in the sleep state.

Optionally, the method further includes: The first network device determines that a device sleep condition is met, and the first network device enters the sleep state. The first network device sends a second IGP packet to the IGP network, where the second IGP packet carries device sleep state information, and the device sleep state information indicates that the first network device is in the sleep state. In other words, after entering the sleep state, the first network device advertises a status of the first network device to the IGP network. The device sleep condition includes at least one of the following: A device sleep moment is reached, and a ratio of energy consumption of the first network device to traffic of the first network device reaches a device sleep threshold.

According to the technical solutions provided in this application, when determining that the device sleep condition is met, the first network device enters the sleep state. This helps reduce the energy consumption of the first network device. After entering the sleep state, the first network device advertises the status of the first network device to the IGP network, so that the network device in the IGP network can perform path calculation.

Optionally, the method further includes: The first network device determines that a device wake-up condition is met, and the first network device enters the wake-up state. The first network device sends a third IGP packet to the IGP network, where the third IGP packet carries device wake-up state information, and the device wake-up state information indicates that the first network device is in the wake-up state. In other words, after entering the wake-up state, the first network device advertises the status of the first network device to the IGP network. The device wake-up condition includes at least one of the following: A device wake-up moment is reached, and the ratio of the energy consumption of the first network device to the traffic of the first network device reaches a device wake-up threshold.

According to the technical solutions provided in this application, when determining that the device wake-up condition is met, the first network device enters the wake-up state. This helps the first network device perform service forwarding. After entering the wake-up state, the first network device advertises the status of the first network device to the IGP network, so that the network device in the IGP network can perform path calculation.

Optionally, the method further includes: The first network device determines that a link sleep condition is met, and the first network device controls a first link to enter the sleep state, where the first link is a link controlled by the first network device. The first network device sends a fourth IGP packet to the IGP network, where the fourth IGP packet carries link sleep state information, and the link sleep state information indicates that the first link is in the sleep state. In other words, after controlling the first link to enter the sleep state, the first network device advertises a status of the first link to the IGP network. The link sleep condition includes at least one of the following: A link sleep moment is reached, and a ratio of energy consumption of the first link to traffic of the first link reaches a link sleep threshold.

According to the technical solutions provided in this application, when determining that the link sleep condition is met, the first network device controls the first link to enter the sleep state. This helps reduce the energy consumption of the first link. After controlling the first link to enter the sleep state, the first network device advertises the status of the first link to the IGP network, so that the network device in the IGP network can perform path calculation.

Optionally, the method further includes: The first network device determines that a link wake-up condition is met, and the first network device controls the first link to enter the wake-up state. The first network device sends a fifth IGP packet to the IGP network, where the fifth IGP packet carries link wake-up state information, and the link wake-up state information indicates that the first link is in the wake-up state. In other words, after controlling the first link to enter the wake-up state, the first network device advertises the status of the first link to the IGP network. The link wake-up condition includes at least one of the following: A link wake-up moment is reached, and the ratio of the energy consumption of the first link to the traffic of the first link reaches a link wake-up threshold.

According to the technical solutions provided in this application, when determining that the link wake-up condition is met, the first network device controls the first link to enter the wake-up state. This helps the first network device perform service forwarding over the first link. After controlling the first link to enter the wake-up state, the first network device advertises the status of the first link to the IGP network, so that the network device in the IGP network can perform path calculation.

Optionally, the method further includes: The first network device determines an outbound interface from the first network device to the first egress device and a next hop from the first network device to the first egress device based on the optimal path from the first network device to the first egress device. The outbound interface from the first network device to the first egress device and the next hop from the first network device to the first egress device are used by the first network device to forward a packet sent to the first egress device, for example, forward a packet whose destination address is an address of the first egress device.

According to a second aspect, a path calculation apparatus is provided, and includes a module configured to perform the path calculation method provided in any one of the first aspect or the optional manners of the first aspect. The module may be implemented based on software, hardware, or a combination of software and hardware, and the module may be randomly combined or divided based on a specific implementation.

According to a third aspect, a path calculation apparatus is provided, and includes a memory and a processor.

The memory is configured to store a computer program.

The processor is configured to execute the computer program stored in the memory, to enable the path calculation apparatus to perform the path calculation method provided in any one of the first aspect or the optional manners of the first aspect.

According to a fourth aspect, a communication system is provided. The communication system includes at least two network devices, and at least one of the at least two network devices includes the path calculation apparatus provided in the second aspect or the third aspect.

According to a fifth aspect, a computer-readable storage medium is provided. The computer-readable storage medium stores a computer program, and when the computer program is executed, the method provided in any one of the first aspect or the optional manners of the first aspect is implemented.

According to a sixth aspect, a computer program product is provided. The computer program product includes a program or code, and when the program or the code is executed, the method provided in any one of the first aspect or the optional manners of the first aspect is implemented.

According to a seventh aspect, a chip is provided. The chip includes a programmable logic circuit and/or program instructions. When the chip runs, the method provided in any one of the first aspect or the optional manners of the first aspect is implemented.

The technical solutions provided in this application bring the following beneficial effects.

In the path calculation method and apparatus, and a system provided in this application, the first network device in the IGP network determines the optimal path from the first network device to the first egress device based on the energy consumption information of the network object in the IGP network, where the energy consumption information of the network object includes the energy consumption of the network object. Therefore, the energy consumption of the optimal path determined by the first network device is low. This helps reduce the energy consumption of the service transmission and can meet the requirement of the green and energy-saving network.

### BRIEF DESCRIPTION OF DRAWINGS

FIG. 1 is a schematic diagram of a communication network;
FIG. 2 is a schematic diagram of a logical topology corresponding to a flexible algorithm (flexible algorithm, Flex-Algo);
FIG. 3 is a schematic diagram of an optimal path tree from a network device E0 to a network device E9;
FIG. 4 is a schematic diagram of an optimal path tree from a network device E1 to a network device E9;
FIG. 5 is a schematic diagram of an optimal path tree from a network device E2 to a network device E9;
FIG. 6 is a schematic diagram of an optimal path tree from a network device E3 to a network device E9;
FIG. 7 is a schematic diagram of an optimal path tree from a network device E4 to a network device E9;
FIG. 8 is a schematic diagram of a logical topology corresponding to another Flex-Algo;
FIG. 9 is a schematic diagram of another optimal path tree from a network device E0 to a network device E9;
FIG. 10 is a schematic diagram of an optimal path tree from a network device E5 to a network device E9;
FIG. 11 is a schematic diagram of an optimal path tree from a network device E6 to a network device E9;
FIG. 12 is a schematic diagram of an optimal path tree from a network device E7 to a network device E9;
FIG. 13 is a schematic diagram of an optimal path tree from a network device E8 to a network device E9;
FIG. 14 is a schematic diagram of an IGP network according to an embodiment of this application;
FIG. 15 is a flowchart of a path calculation method according to an embodiment of this application;
FIG. 16 is a schematic diagram of a device energy consumption TLV field according to an embodiment of this application;
FIG. 17 is a schematic diagram of a link energy consumption TLV field according to an embodiment of this application;
FIG. 18 is a flowchart of a method for determining an optimal path according to an embodiment of this application;
FIG. 19 is a schematic diagram of a pruned network topology according to an embodiment of this application;
FIG. 20 is a schematic diagram of an optimal path tree from a first network device to a first egress device according to an embodiment of this application;
FIG. 21 is a flowchart of another path calculation method according to an embodiment of this application;
FIG. 22 is a schematic diagram of a flexible algorithm definition (flexible algorithm definition, FAD) field according to an embodiment of this application;
FIG. 23 is a schematic diagram of a device energy consumption constraint sub-TLV field according to an embodiment of this application;
FIG. 24 is a schematic diagram of a link energy consumption constraint sub-TLV field according to an embodiment of this application;
FIG. 25 is a flowchart of a method for adjusting a status of a first network device by the first network device according to an embodiment of this application;
FIG. 26 is a flowchart of a method for adjusting a status of a first link by a first network device according to an embodiment of this application;
FIG. 27 is a schematic diagram of a structure of a path calculation apparatus according to an embodiment of this application;
FIG. 28 is a schematic diagram of a structure of another path calculation apparatus according to an embodiment of this application; and
FIG. 29 is a schematic diagram of a structure of still another path calculation apparatus according to an embodiment of this application.

### DESCRIPTION OF EMBODIMENTS

The following further describes in detail implementations of this application with reference to the accompanying drawings.

To implement service transmission, a network device may calculate an optimal path based on IGP. IGP may include an intermediate system to intermediate system (intermediate system to intermediate system, IS-IS) protocol and an open shortest path first (open shortest path first, OSPF) protocol.

In a conventional IGP, the network device usually calculates the optimal path based on a cost of a link. However, energy consumption of the optimal path calculated based on the conventional IGP may be high, and consequently, energy consumption of the service transmission is high. In addition, it may be difficult for the optimal path calculated based on the conventional IGP to meet a requirement of a green and energy-saving network. The green and energy-saving network is a concept that emerges with the development of network technologies. The green and energy-saving network aims to ensure network performance, meet a service requirement, and match a network design objective of a user as well as maximizing energy-saving benefits. A design of the green and energy-saving network includes a hardware energy-saving design and a network planning-based energy-saving design. For the hardware energy-saving design, for example, the network device uses a component with low energy consumption. For the network planning-based energy-saving design, for example, the network device selects a path with low energy consumption for service forwarding. Energy consumption of a path may include energy consumption of a network device on the path and energy consumption of the link on the path.

A Flex-Algo technology is a path calculation technology proposed in an internet engineering task force (Internet Engineering Task Force, IETF) link state routing (link state routing, LSR) flexible algorithm draft (draft-ietf-lsr-flex-algo) draft, and is currently mainly applied to a segment routing (segment routing, SR) network. The Flex-Algo technology provides simple solutions: separating a routing plane, constraining a traffic engineering (traffic engineering, TE) path, and low-delay routing, and allows the user to customize a Flex-Algo. The network device may calculate an optimal path from the network device to a destination address based on the Flex-Algo customized by the user. The Flex-Algo technology can more simply and more flexibly implement a TE capability of a network, and meet differentiated requirements of various different services in a 5th generation mobile communication technology (5th generation mobile communication technology, 5G) era. The technical solutions of this application relate to the Flex-Algo technology. For ease of understanding of the technical solutions of this application, the following first describes the Flex-Algo technology and a process of calculating an optimal path based on the Flex-Algo technology.

Usually, the Flex-Algo includes three elements: a calculation type (calc type), a metric type (metric type), and constraints (constraints). The Flex-Algo may use a Flex-Algo identifier (identifier, ID) as a unique identifier. In a current Flex-Algo technology, the calculation type includes a shortest path first (shortest path first, SPF) algorithm and a strict-SPF (strict-SPF) algorithm; the metric type includes an IGP metric, a minimum unidirectional link latency metric, and a TE metric; and the constraints include an administrative group (admin group), a shared risk link group (shared risk link group, SRLG), and a packet loss rate. The SPF algorithm is an SPF algorithm in a conventional IGP. The SPF algorithm and is also called a Dijkstra algorithm. The SPF algorithm allows a local policy to overwrite an optimal path calculated by using the SPF. The strict-SPF algorithm does not allow the local policy to overwrite the optimal path calculated by using the SPF. An optimal path calculated by using the strict-SPF algorithm needs to be strictly followed. The IGP metric is a link cost metric in the conventional IGP, and the IGP metric indicates that the optimal path is calculated by using the cost of the link as a metric. The minimum unidirectional link latency metric indicates that the optimal path is calculated by using unidirectional link latency as the metric. The TE metric indicates that the optimal path is calculated by using a TE configuration as the metric.

In the constraints of the Flex-Algo, the admin group is a link constraint, and is usually described by using exclude (exclude) admin group, include any (include any) admin group, and include all (include all) admin group. exclude admin group represents that a link administrative group cannot include any referenced affinity name, and a link that does not meet the condition needs to be excluded from path calculation. include any admin group represents that as long as a link administrative group includes any referenced affinity name, the link administrative group can participate in path calculation. include all admin group represents that a link administrative group needs to include all referenced affinity names, and a link that does not meet the condition needs to be excluded from path calculation. The SRLG is the link constraint, and represents a set of links with a same fault risk. Usually, an SRLG constraint is described by using exclude SRLG. During path calculation, if a link in one SRLG cannot participate in the path calculation, all links in the SRLG cannot participate in the path calculation. The packet loss rate is the link constraint, and represents a maximum packet loss rate of a link. Usually, a packet loss rate constraint is described by using exclude maximum link packet loss rate (exclude max-link-loss). exclude max-link-loss represents that a link with the maximum packet loss rate needs to be excluded during path calculation.

In the Flex-Algo technology, a Flex-Algo capability of a network device may be configured by a controller or manually (in other words, supporting which Flex-Algos is configured for the network device). The network device may advertise the Flex-Algo capability of the network device in an entire communication network (for example, an IGP network) (in other words, the network device advertises an ID of the Flex-Algo supported by the network device to the entire communication network). In this way, each network device in the communication network can learn of a Flex-Algo capability of another network device in the communication network. In addition, the Flex-Algo may be defined in at least one network device by the controller or manually (for example, three elements of the Flex-Algo are defined). The at least one network device advertises the Flex-Algo to the entire communication network. In this way, each network device in the communication network can learn of the Flex-Algo, in other words, each network device in the communication network can learn of content of the Flex-Algo. Each network device in the communication network may determine, based on a network topology of the communication network and the Flex-Algo supported by the network device, a logical topology corresponding to the Flex-Algo, and determine an optimal path from the network device to a destination address based on the logical topology corresponding to the Flex-Algo. For example, each network device in the communication network prunes the network topology of the communication network based on a metric type of the Flex-Algo supported by the network device and constraints of the Flex-Algo, to obtain a pruned network topology. The pruned network topology is the logical topology corresponding to the Flex-Algo. Each network device in the communication network may determine the optimal path from the network device to the destination address based on a calculation type of the Flex-Algo, the metric type of the Flex-Algo, and the logical topology corresponding to the Flex-Algo. Each network device in the communication network may determine at least one optimal path from the network device to the destination address. Optimal paths that are from the network device to the destination address and that are determined by network devices may form an optimal path tree. Optionally, that the network device determines the optimal path from the network device to the destination address based on the calculation type of the Flex-Algo, the metric type of the Flex-Algo, and the logical topology corresponding to the Flex-Algo includes: The network device determines an optimal path tree from the network device to the destination address based on the calculation type of the Flex-Algo, the metric type of the Flex-Algo, and the logical topology corresponding to the Flex-Algo, where the optimal path tree includes at least one optimal path from the network device to the destination address. After determining the optimal path from the network device to the destination address, each network device may determine an outbound interface from the network device to the destination address and a next hop from the network device to the destination address based on the optimal path from the network device to the destination address. For example, the network device determines the outbound interface from the network device to the destination address and the next hop from the network device to the destination address based on the optimal path tree from the network device to the destination address.

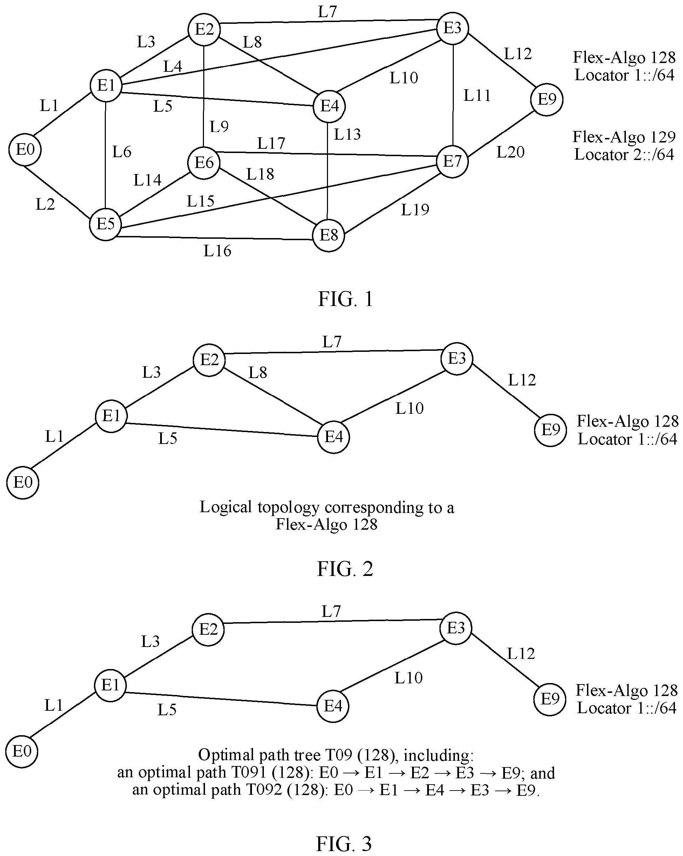

For example, FIG. 1 is a schematic diagram of a communication network. The communication network may be an IGP network, and the communication network may be an SR network. For example, the communication network may be a segment routing multi-protocol label switching (segment routing multi-protocol label switching, SR MPLS) network or a segment routing internet protocol version 6 (segment routing internet protocol version 6, SRv6) network. As shown in FIG. 1, the communication network includes network devices E0 to E9, and a connection line between any two network devices represents a link between the two network devices. For example, a connection line between the network device E0 and the network device E1 represents a link L1 between the network device E0 and the network device E1, a connection line between the network device E0 and the network device E5 represents a link L2 between the network device E0 and the network device E5, and a connection line between the network device E1 and the network device E2 represents a link L3 between the network device E1 and the network device E2. The rest is deduced by analogy.

It is assumed that all network devices E0, E1, E2, E3, E4, and E9 support a Flex-Algo 128 (where "128" is an ID of the Flex-Algo), and all network devices E0, E5, E6, E7, E8, and E9 support a Flex-Algo 129 (where "129" is an ID of the Flex-Algo). In this case, the network device E0 may advertise the ID of the Flex-Algo 128 and the ID of the Flex-Algo 129 that are supported by the network device E0 to the entire communication network shown in FIG. 1. Each of the network devices E1, E2, E3, and E4 may advertise the ID of the Flex-Algo 128 supported by the network devices to the entire communication network shown in FIG. 1. Each of the network devices E5, E6, E7, and E8 may advertise the ID of the Flex-Algo 129 supported by the network devices to the entire communication network shown in FIG. 1. It is assumed that the Flex-Algo 128 is defined in network devices E1 and E9, and in addition, a calculation type of the Flex-Algo 128 is an SPF algorithm, a metric type of the Flex-Algo 128 is an IGP metric, and constraints of the Flex-Algo 128 are excluding a link whose admin-group is a configuration 1. In this case, the network devices E1 and E9 may advertise the Flex-Algo 128 to the entire communication network shown in FIG. 1. It is assumed that the Flex-Algo 129 is defined in network devices E5 and E9, and in addition, a calculation type of the Flex-Algo 129 is a strict-SPF algorithm, a metric type of the Flex-Algo 129 is a minimum unidirectional link latency metric, and constraints of the Flex-Algo 129 are excluding a link whose admin-group is a configuration 2. In this case, the network devices E5 and E9 may advertise the Flex-Algo 129 to the entire communication network shown in FIG. 1. As shown in FIG. 1, the network device E9 releases two locators (locators). One is a locator 1: :/64 based on the Flex-Algo 128 (in other words, the locator 1: :/64 is associated with the Flex-Algo 128), and the other is a locator 2::/64 based on the Flex-Algo 129 (that is, the locator 2::/64 is associated with the Flex-Algo 129). Each locator in the locator 1::/64 and the locator 2::/64 may be an address of the network device E9.

First, an implementation process in which each of network devices E0, E1, E2, E3, and E4 calculates an optimal path from a network node to the locator 1::/64 of the network device E9 based on the Flex-Algo 128 is described.

Each of the network devices E0, E1, E2, E3, and E4 may determine, based on the metric type of the Flex-Algo 128, the constraints of the Flex-Algo 128, and a network topology of the communication network shown in FIG. 1, a logical topology corresponding to the Flex-Algo 128. It is assumed that a link L4 is the link whose admin-group is the configuration 1. In this case, when determining the logical topology corresponding to the Flex-Algo 128, each of the network devices E0, E1, E2, E3, and E4 excludes the link L4 based on the constraints of the Flex-Algo 128; and based on a Flex-Algo capability of each of the network devices E0 to E9, excludes network devices E5, E6, E7, and E8 that do not support the Flex-Algo 128 and excludes links that are related to the network devices E5, E6, E7, and E8 and that do not support the Flex-Algo 128. The logical topology corresponding to the Flex-Algo 128 that is determined by each of the network devices E0, E1, E2, E3, and E4 may be shown in FIG. 2.

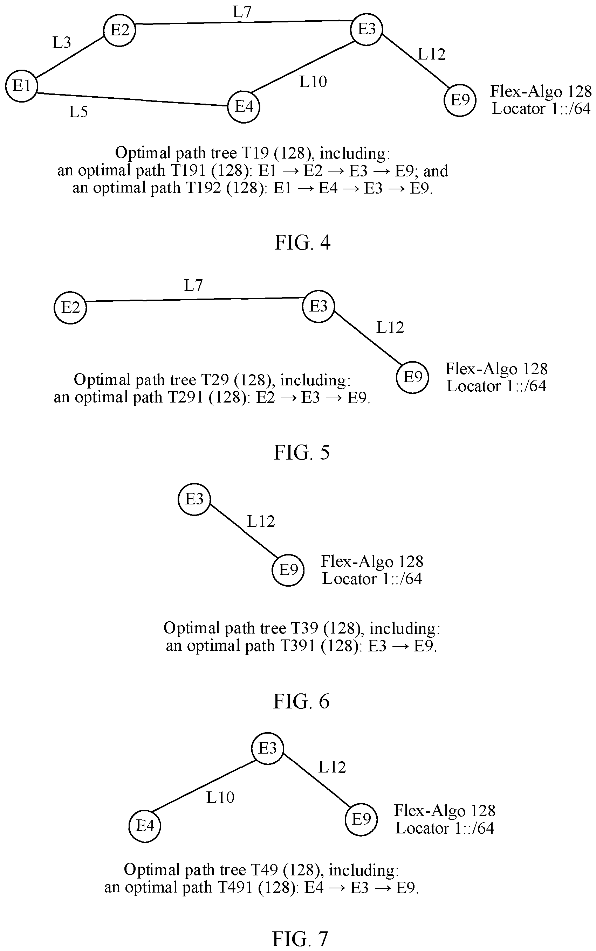

After determining the logical topology corresponding to the Flex-Algo 128, each of the network devices E0, E1, E2, E3, and E4 may determine an optimal path tree from the network device to the locator 1::/64 of the network device E9 based on the calculation type of the Flex-Algo 128, the metric type of the Flex-Algo 128, and the logical topology corresponding to the Flex-Algo 128, and determine an outbound interface from the network device to the locator 1::/64 of the network device E9 and a next hop from the network device to the locator 1::/64 of the network device E9 based on the optimal path tree from the network device to the locator 1::/64 of the network device E9. For example, the network device E0 determines an optimal path tree T09 (128) from the network device E0 to the locator 1::/64 of the network device E9 based on the calculation type of the Flex-Algo 128, the metric type of the Flex-Algo 128, and the logical topology corresponding to the Flex-Algo 128. The optimal path tree T09 (128) is shown in FIG. 3. The optimal path tree T09 (128) includes an optimal path T091 (128) and an optimal path T092 (128). The network device E0 may determine, based on the optimal path tree T09 (128), that an outbound interface from the network device E0 to the locator 1::/64 of the network device E9 is an interface that corresponds to the link L1 and that is on the network device E0, and determine that a next hop from the network device E0 to the locator 1::/64 of the network device E9 is the network device E1. The network device E1 determines an optimal path tree T19 (128) from the network device E1 to the locator 1::/64 of the network device E9 based on the calculation type of the Flex-Algo 128, the metric type of the Flex-Algo 128, and the logical topology corresponding to the Flex-Algo 128. The optimal path tree T19 (128) is shown in FIG. 4. The optimal path tree T19 (128) includes an optimal path T191 (128) and an optimal path T192 (128). It is assumed that a cost of the link L3 is 10, and a cost of a link L5 is 100. In this case, the network device E1 may determine, based on the optimal path tree T19 (128), that an outbound interface from the network device E1 to the locator 1: :/64 of the network device E9 is an interface that corresponds to the link L3 and that is on the network device E1, and determine that a next hop from the network device E1 to the locator 1: :/64 of the network device E9 is the network device E2. The network device E2 determines an optimal path tree T29 (128) from the network device E2 to the locator 1::/64 of the network device E9 based on the calculation type of the Flex-Algo 128, the metric type of the Flex-Algo 128, and the logical topology corresponding to the Flex-Algo 128. The optimal path tree T29 (128) is shown in FIG. 5. The optimal path tree T29 (128) includes an optimal path T291 (128). The network device E2 may determine, based on the optimal path tree T29 (128), that an outbound interface from the network device E2 to the locator 1::/64 of the network device E9 is an interface that corresponds to a link L7 and that is on the network device E2, and determine that a next hop from the network device E2 to the locator 1::/64 of the network device E9 is the network device E3. The network device E3 determines an optimal path tree T39 (128) from the network device E3 to the locator 1 ::/64 of the network device E9 based on the calculation type of the Flex-Algo 128, the metric type of the Flex-Algo 128, and the logical topology corresponding to the Flex-Algo 128. The optimal path tree T39 (128) is shown in FIG. 6. The optimal path tree T39 (128) includes an optimal path T391 (128). The network device E3 may determine, based on the optimal path tree T39 (128), that an outbound interface from the network device E3 to the locator 1::/64 of the network device E9 is an interface that corresponds to a link L12 and that is on the network device E3, and determine that a next hop from the network device E3 to the locator 1::/64 of the network device E9 is the network device E9. The network device E4 determines an optimal path tree T49 (128) from the network device E4 to the locator 1::/64 of the network device E9 based on the calculation type of the Flex-Algo 128, the metric type of the Flex-Algo 128, and the logical topology corresponding to the Flex-Algo 128. The optimal path tree T49 (128) is shown in FIG. 7. The optimal path tree T49 (128) includes an optimal path T491 (128). The network device E4 may determine, based on the optimal path tree T49 (128), that an outbound interface from the network device E4 to the locator 1::/64 of the network device E9 is an interface that corresponds to a link L10 and that is on the network device E4, and determine that a next hop from the network device E4 to the locator 1::/64 of the network device E9 is the network device E3.

Then, an implementation process in which each of the network devices E0, E5, E6, E7, and E8 calculates an optimal path from a network node to the locator 2: :/64 of the network device E9 based on the Flex-Algo 129 is described.

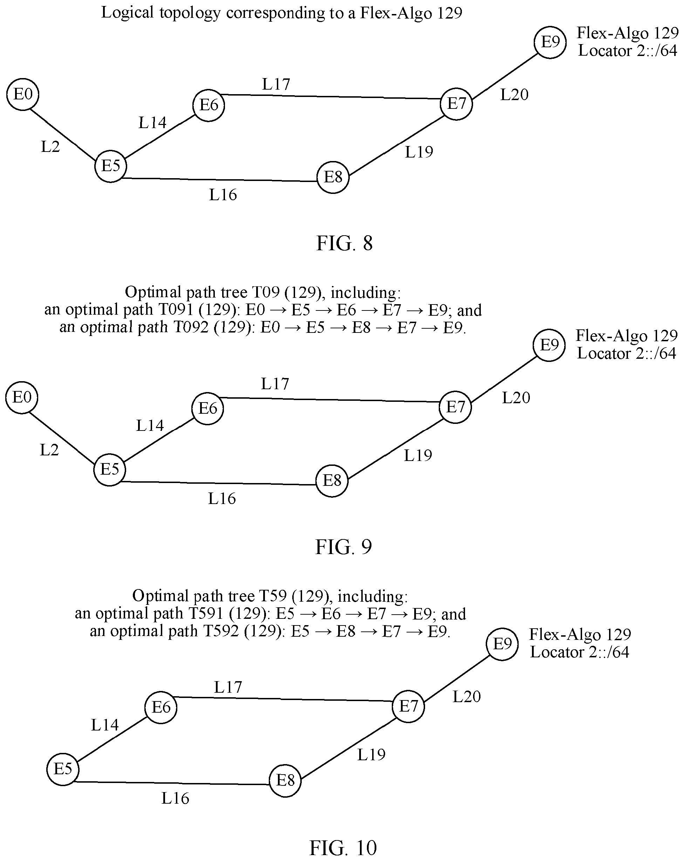

Each of the network devices E0, E5, E6, E7, and E8 may determine, based on the metric type of the Flex-Algo 129, the constraints of the Flex-Algo 129, and the network topology of the communication network shown in FIG. 1, a logical topology corresponding to the Flex-Algo 129. It is assumed that a link L15 does not include minimum unidirectional link latency (for example, none of the network devices E0, E5, E6, E7, E8, and E9 learns of the minimum unidirectional link latency of the link L15), and a link L18 is the link whose admin-group is the configuration 2. In this case, when determining the logical topology corresponding to the Flex-Algo 129, each of the network devices E0, E5, E6, E7, and E8 excludes the link L15 based on the metric type of the Flex-Algo 129; excludes the link L18 based on the constraints of the Flex-Algo 129; and based on the Flex-Algo capability of each of the network devices E0 to E9, excludes network devices E1, E2, E3, and E4 that do not support the Flex-Algo 129 and excludes links that are related to the network devices E1, E2, E3, and E4 and that do not support the Flex-Algo 129. The logical topology corresponding to the Flex-Algo 129 that is determined by each of the network devices E0, E5, E6, E7, and E8 may be shown in FIG. 8.

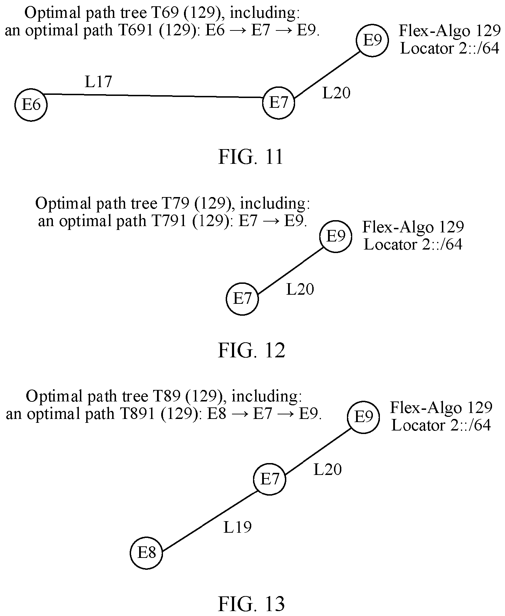

After determining the logical topology corresponding to the Flex-Algo 129, each of the network devices E0, E5, E6, E7, and E8 may determine an optimal path tree from the network device to the locator 2::/64 of the network device E9 based on the calculation type of the Flex-Algo 129, the metric type of the Flex-Algo 129, and the logical topology corresponding to the Flex-Algo 129, and determine an outbound interface from the network device to the locator 2::/64 of the network device E9 and a next hop from the network device to the locator 2::/64 of the network device E9 based on the optimal path tree from the network device to the locator 2::/64 of the network device E9. For example, the network device E0 determines an optimal path tree T09 (129) from the network device E0 to the locator 2::/64 of the network device E9 based on the calculation type of the Flex-Algo 129, the metric type of the Flex-Algo 129, and the logical topology corresponding to the Flex-Algo 129. The optimal path tree T09 (129) is shown in FIG. 9. The optimal path tree T09 (129) includes an optimal path T091 (129) and an optimal path T092 (129). The network device E0 may determine, based on the optimal path tree T09 (129), that an outbound interface from the network device E0 to the locator 2::/64 of the network device E9 is an interface that corresponds to the link L2 and that is on the network device E0, and determine that a next hop from the network device E0 to the locator 2::/64 of the network device E9 is a network device E5. The network device E5 determines an optimal path tree T59 (129) from the network device E5 to the locator 2::/64 of the network device E9 based on the calculation type of the Flex-Algo 129, the metric type of the Flex-Algo 129, and the logical topology corresponding to the Flex-Algo 129. The optimal path tree T59 (129) is shown in FIG. 10. The optimal path tree T59 (129) includes an optimal path T591 (129) and an optimal path T592 (129). It is assumed that minimum unidirectional link latency of a link L14 is 100, and minimum unidirectional link latency of a link L16 is 200. In this case, the network device E5 may determine, based on the optimal path tree T59 (129), that an outbound interface from the network device E5 to the locator 2::/64 of the network device E9 is an interface that corresponds to the link L14 and that is on the network device E5, and determine that a next hop from the network device E5 to the locator 2::/64 of the network device E9 is the network device E6. The network device E6 determines an optimal path tree T69 (129) from the network device E6 to the locator 2::/64 of the network device E9 based on the calculation type of the Flex-Algo 129, the metric type of the Flex-Algo 129, and the logical topology corresponding to the Flex-Algo 129. The optimal path tree T69 (129) is shown in FIG. 11. The optimal path tree T69 (129) includes an optimal path T691 (129). The network device E6 may determine, based on the optimal path tree T69 (129), that an outbound interface from the network device E6 to the locator 2::/64 of the network device E9 is an interface that corresponds to a link L17 and that is on the network device E6, and determine that a next hop from the network device E6 to the locator 2::/64 of the network device E9 is the network device E7. The network device E7 determines an optimal path tree T79 (129) from the network device E7 to the locator 2::/64 of the network device E9 based on the calculation type of the Flex-Algo 129, the metric type of the Flex-Algo 129, and the logical topology corresponding to the Flex-Algo 129. The optimal path tree T79 (129) is shown in FIG. 12. The optimal path tree T79 (129) includes an optimal path T791 (129). The network device E7 may determine, based on the optimal path tree T79 (129), that an outbound interface from the network device E7 to the locator 2::/64 of the network device E9 is an interface that corresponds to a link L20 and that is on the network device E7, and determine that a next hop from the network device E7 to the locator 2::/64 of the network device E9 is the network device E9. The network device E8 determines an optimal path tree T89 (129) from the network device E8 to the locator 2::/64 of the network device E9 based on the calculation type of the Flex-Algo 129, the metric type of the Flex-Algo 129, and the logical topology corresponding to the Flex-Algo 129. The optimal path tree T89 (129) is shown in FIG. 13. The optimal path tree T89 (129) includes an optimal path T891 (129). The network device E8 may determine, based on the optimal path tree T89 (129), that an outbound interface from the network device E8 to the locator 2: :/64 of the network device E9 is an interface that corresponds to a link L19 and that is on the network device E8, and determine that a next hop from the network device E8 to the locator 2::/64 of the network device E9 is the network device E7.

As described above, for a current Flex-Algo, a calculation type includes an SPF algorithm and a strict-SPF algorithm, a metric type includes an IGP metric, a minimum unidirectional link latency metric, and a TE metric, and a constraint includes an admin group, an SRLG, and a packet loss rate. However, based on a definition of the current Flex-Algo, energy consumption of an optimal path calculated based on a current Flex-Algo technology may be high, and consequently, energy consumption of service transmission is high, and it is difficult to meet a requirement of a green and energy-saving network.

In view of a problem that exists in a current path calculation solution, embodiments of this application provide a path calculation method and apparatus, and a system. The technical solutions provided in embodiments of this application may be applied to an IGP network. A network device in the IGP network may calculate an optimal path based on energy consumption information of a network object (a network device and/or a link) in the IGP network. Because the network device considers the energy consumption information of the network object when calculating the optimal path, energy consumption of the optimal path calculated by the network device is low. This helps reduce energy consumption of service transmission, and can meet a requirement of a green and energy-saving network.

The following describes the technical solutions in embodiments of this application. First, an application scenario of embodiments of this application is described.

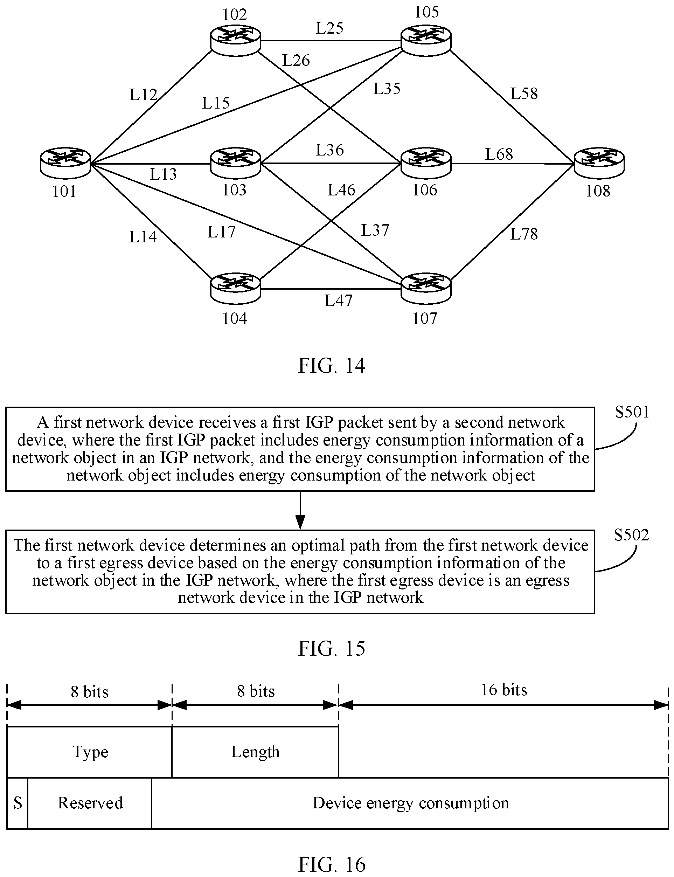

FIG. 14 is a schematic diagram of an application scenario according to an embodiment of this application. This application scenario provides an IGP network. As shown in FIG. 14, the IGP network includes a plurality of network devices 101 to 108, and a connection line between any two of the network devices 101 to 108 represents a link between the two network devices. For example, a connection line between the network device 101 and the network device 102 represents a link L12 between the network device 101 and the network device 102, a connection line between the network device 101 and the network device 103 represents a link L13 between the network device 101 and the network device 103, and a connection line between the network device 101 and the network device 104 represents a link L14 between the network device 101 and the network device 104. The rest is deduced by analogy. A link between any two network devices may be a physical link, or may be a logical link. In some implementation scenarios, the network device is also referred to as a network node. This is not limited in embodiments of this application.

The network devices 101 to 108 may include an edge network device and a core network device. The edge network device is located at an edge of the IGP network. The edge network device may be used by a workstation to access the IGP network. The core network device is configured to connect different edge network devices. The core network device may be configured to forward a service between different edge network devices. The network devices 101 to 108 are all configured to forward a service between different workstations that access the IGP network. For example, both the network device 101 and the network device 108 are edge network devices, and network devices 102 to 107 are all core network devices. The edge network device may be a provider edge (provider edge, PE) device, and the core network device may be a provider (provider, P) device. The edge network device in the IGP network may include an ingress network device and an egress network device. The ingress network device is configured to provide a traffic ingress, and the egress network device is configured to provide a traffic egress. Optionally, the network device 101 is the ingress network device in the IGP network, and the network device 108 is the egress network device in the IGP network.

Each of the network devices 101 to 108 may be a device such as a switch or a router. The network devices 101 to 108 may be same network devices. For example, the network devices 101 to 108 are all routers. Alternatively, at least two of the network devices 101 to 108 are different network devices. For example, one part of the network devices 101 to 108 are routers, and the other part are switches. The workstation that accesses the IGP network may be a host, a server, a base station, a virtual machine (virtual machine, VM), or the like. The host may be a smartphone, a tablet computer, a desktop computer, an internet of things (internet of things, IoT) device, or the like. This is not limited in embodiments of this application.

In embodiments of this application, a network object in the IGP network may include at least one of a network device in the IGP network and a link in the IGP network. The network device in the IGP network may advertise energy consumption information of a network object related to the network device to the IGP network. Energy consumption information of a network object related to any network device may include at least one of energy consumption information of the network device and energy consumption information of a link related to the network device. Energy consumption information of any network object may include energy consumption of the network object, and may further include status information of the network object. The network device in the IGP network may calculate an optimal path based on the energy consumption information of the network object in the IGP network, and energy consumption of the calculated optimal path is low. This meets a requirement of a green and energy-saving network. For example, as shown in FIG. 14, the network device 101 may calculate an optimal path from the network device 101 to the network device 108 based on the energy consumption information of the network object in the IGP network. The network device 102 may calculate an optimal path from the network device 102 to the network device 108 based on the energy consumption information of the network object in the IGP network. The network device 103 may calculate an optimal path from the network device 103 to the network device 108 based on the energy consumption information of the network object in the IGP network. The rest is deduced by analogy. Energy consumption of an optimal path that is from each of the network devices 101 to 107 to the network device 108 and that is calculated by the network device may be low. This can meet the requirement of the green and energy-saving network.

It should be noted that the application scenario shown in FIG. 14 is merely used as an example, and is not intended to limit the technical solutions of this application. In an implementation process, the IGP network may include more or fewer devices than those shown in FIG. 14, and a quantity of network devices may be configured as required. In addition, the IGP network may further include a controller, to control the network device in the IGP network. The controller may exist independently of the network device, or may be integrated into a network device. This is not limited in embodiments of this application.

The foregoing describes the application scenario of this application, and the following describes embodiments of a path calculation method of this application.

FIG. 15 is a flowchart of a path calculation method according to an embodiment of this application. The path calculation method is applied to a first network device in an IGP network. As shown in FIG. 15, the method includes the following steps S501 and S502.

S501: The first network device receives a first IGP packet sent by a second network device, where the first IGP packet includes energy consumption information of a network object in the IGP network, and the energy consumption information of the network object includes energy consumption of the network object.

The first network device and the second network device may be any two network devices in the IGP network. Optionally, the second network device is a neighboring device of the first network device. For example, as shown in FIG. 14, the first network device is a network device 101, and the second network device is any one of network devices 102 to 105 and a network device 107; the first network device is a network device 102, and the second network device is any one of a network device 101, a network device 105, and a network device 106; or the first network device is a network device 105, and the second network device is any one of network devices 101 to 103 and a network device 108. The rest is deduced by analogy. The first network device and the second network device are not limited in this embodiment of this application.

In this embodiment of this application, the network object includes at least one of a network device and a link, and the energy consumption information of the network object includes the energy consumption of the network object. The energy consumption information of the network object may further include status information of the network object, where the status information of the network object indicates a status of the network object, and the status of the network object includes a sleep state or a wake-up state.

Energy consumption of the network device may be overall energy consumption of the network device. The energy consumption of the network device may be determined based on at least one of the following factors: a processing component in the network device, a temperature adjustment component in the network device, and an environment in which the network device is located. The processing component in the network device, the temperature adjustment component in the network device, and the environment in which the network device is located may all be referred to as device energy consumption factors. For example, the processing component in the network device is a processor, for example, is a central processing unit (central processing unit, CPU). A higher running speed of the processor in the network device indicates higher energy consumption of the network device. The temperature adjustment component in the network device may include a cooling component. For example, the cooling component may be a fan. A higher rotation speed of the fan in the network device indicates higher energy consumption of the network device. The environment in which the network device is located may be an equipment room in which the network device is located. An air conditioner is usually provided in the equipment room in which the network device is located. When working, the air conditioner and other facilities in the equipment room in which the network device is located easily cause energy consumption of the network device. A higher temperature of the environment in which the network device is located indicates higher energy consumption of the network device.

Energy consumption of a link may be energy consumption of an interface board corresponding to the link, and an interface board corresponding to any link may include interface boards at two ends of the link. The energy consumption of the link may be determined based on at least one of the following factors: an NP chip corresponding to the link, an optical-electrical conversion chip corresponding to the link, and a serial interface corresponding to the link. The NP chip corresponding to the link, the optical-electrical conversion chip corresponding to the link, and the serial interface corresponding to the link may all be on the interface board corresponding to the link. The NP chip corresponding to the link, the optical-electrical conversion chip corresponding to the link, and the serial interface corresponding to the link may be referred to as link energy consumption factors. For example, the NP chip corresponding to the link includes NP chips on the interface boards at two ends of the link, and a higher running speed of the NP chip corresponding to the link indicates higher energy consumption of the link. The optical-electrical conversion chip corresponding to the link includes optical-electrical conversion chips on the interface boards at two ends of the link, and higher energy consumption of the optical-electrical conversion chip corresponding to the link indicates higher energy consumption of the link. The serial interface corresponding to the link includes serial interfaces on the interface boards at two ends of the link, and higher energy consumption of the serial interface corresponding to the link indicates higher energy consumption of the link.

A status of the network device includes the sleep state or the wake-up state. A network device in the sleep state meets at least one of the following: A channelization module in the network device is in the sleep state, a network process unit (network process unit, NPU) in the network device is in a warm backup state, a switch fabric unit in the network device is in the warm backup state, and a redundant power supply in the network device is in an off state. A network device in the wake-up state meets: A channelization module in the network device is in the wake-up state, an NPU in the network device is in a hot backup state, a fabric unit in the network device is in the hot backup state, a redundant power supply in the network device is in an on state, and another component in the network device may also be in the on state. The on state and the wake-up state are also referred to as UP states, and the off state is also referred to as a DOWN state.

A status of the link includes the sleep state or the wake-up state, and the status of the link may be determined based on a status of the interface board corresponding to the link. The status of the interface board may be determined based on a status of the NP chip, the optical-electrical conversion chip, the serial interface, or the like on the interface board. For example, if at least one of an NP chip, an optical-electrical conversion chip, and a serial interface that are on an interface board is in a disabled state, the interface board is in the sleep state, and a link using the interface board as an endpoint is in the sleep state; or if an NP chip, an optical-electrical conversion chip, and a serial interface that are on an interface board are all in an enabled state, the interface board is in the wake-up state, interface boards at two ends of a link are in the wake-up state, and the link is in the wake-up state. Optionally, a link in the sleep state meets: An interface board at at least one end of the link is in the sleep state. For example, the link in the sleep state meets at least one of the following: an NP chip on an interface board at at least one end of the link is in the disabled state, an optical-electrical conversion chip on an interface board at at least one end of the link is in the disabled state, and a serial interface on an interface board at at least one end of the link is in the disabled state. A link in the wake-up state meets: Interface boards at two ends of the link are in the wake-up state. For example, the link in the wake-up state meets: NP chips on the interface boards at two ends of the link are in the enabled state, optical-electrical conversion chips on the interface boards at two ends of the link are in the enabled state, and serial interfaces on the interface boards at two ends of the link are in the enabled state. The enabled state and the wake-up state are also referred to as UP states, and the disabled state is also referred to as the DOWN state.

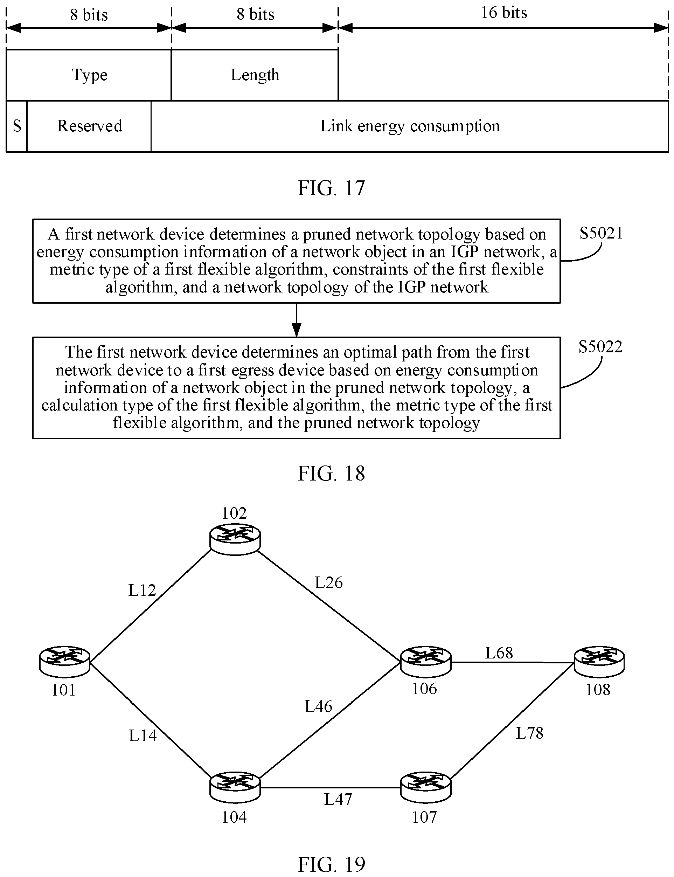

In this embodiment of this application, the first IGP packet may include at least one of a device energy consumption type length value (type length value, TLV) field and a link energy consumption TLV field. The device energy consumption TLV field is used to carry energy consumption information of the network device, and the link energy consumption TLV field is used to carry energy consumption information of the link. In an example, a device energy consumption type length value (type length value, TLV) field is shown in FIG. 16. The device energy consumption TLV field includes a type (type) field, a length (length) field, a status (status, S) field, a reserved (reserved) field, and a device energy consumption field. The type field is used to carry a type of the device energy consumption TLV field, the length field is used to carry a length of a value field (including the S field, the reserved field, and the device energy consumption field) of the device energy consumption TLV field, the S field is used to carry status information of the network device, the device energy consumption field is used to carry energy consumption of the network device, and the reserved field is used to support future extension. For a device energy consumption TLV field corresponding to a network device, if a value of an S field in the device energy consumption TLV field is wake-up state information (for example, 1), it indicates that the network device is in a wake-up state; or if a value of an S field in the device energy consumption TLV field is sleep state information (for example, 0), it indicates that the network device is in a sleep state. A link energy consumption TLV field may be shown in FIG. 17. The link energy consumption TLV field includes a type field, a length field, an S field, a reserved field, and a link energy consumption field. The type field is used to carry a type of the link energy consumption TLV field, the length field is used to carry a length of a value field of the link energy consumption TLV field, the S field is used to carry status information of a link, the link energy consumption field is used to carry energy consumption of the link, and the reserved field is used to support future extension. For a link energy consumption TLV field corresponding to a link, if a value of a field in the link energy consumption TLV field is wake-up state information, it indicates that the link is in a wake-up state; or if a value of a status field in the link energy consumption TLV field is sleep state information, it indicates that the link is in a sleep state. Optionally, for the link energy consumption TLV field shown in FIG. 17, the S field in the link energy consumption TLV field may be used to carry status information of an interface board at one end of the link, and the link energy consumption field in the link energy consumption TLV field may be used to carry energy consumption of the interface board at one end of the link. For example, for a link energy consumption TLV field corresponding to a link, if a value of a field in the link energy consumption TLV field is wake-up state information, it indicates that an interface board at one end of the link is in the wake-up state; or if a value of a status field in the link energy consumption TLV field is sleep state information, it indicates that an interface board at one end of the link is in the sleep state.

In an optional embodiment, the first IGP packet is a link state packet. For example, the first IGP packet is a link state advertisement (link state advertisement, LSA) packet in an OSPF protocol, or a link state protocol data unit (link state protocol data unit, LSP) packet in an IS-IS protocol. The first IGP packet may include at least one device energy consumption TLV field and at least one link energy consumption TLV field. Each device energy consumption TLV field may be an independent TLV field in the first IGP packet, and each device energy consumption TLV field is used to carry energy consumption information of one network device. Each link energy consumption TLV field may be a sub-TLV field in any one of the following TLV fields in the first IGP packet: a TLV 22, a TLV 23, a TLV 25, a TLV 141, a TLV 222, a TLV 223, a sub-TLV 16 in the TLV 22, a sub-TLV 16 in the TLV 23, a sub-TLV 16 in the TLV 25, a sub-TLV 16 in the TLV 141, a sub-TLV 16 in the TLV 222, and a sub-TLV 16 in the TLV 223. Each link energy consumption TLV field is used to carry energy consumption information of an interface board at one end of a link. The first network device may distinguish between the device energy consumption TLV field and the link energy consumption TLV field based on different locations of the device energy consumption TLV field and the link energy consumption TLV field in the first IGP packet, to determine energy consumption information of a network device included in the first IGP packet and energy consumption information of a link included in the first IGP packet. Alternatively, a value of the type field in the device energy consumption TLV field is different from a value of the type field in the link energy consumption TLV field. The first network device may distinguish between the device energy consumption TLV field and the link energy consumption TLV field based on different values of the type field in the device energy consumption TLV field and the link energy consumption TLV field, to determine energy consumption information of a network device included in the first IGP packet and energy consumption information of a link included in the first IGP packet.

In this embodiment of this application, each network device in the IGP network may obtain energy consumption information of a network object related to the network device, and advertise the energy consumption information of the network object related to the network device to the IGP network. The energy consumption information of the network object related to the network device may include at least one of energy consumption information of the network device and energy consumption information of a link related to the network device. Energy consumption information of each network object includes energy consumption of the network object, and may further include status information of the network object. For example, energy consumption information that is obtained by each network device and that is of any link related to the network device may be energy consumption information of an interface board that is in the network device and that corresponds to the link (that is, the energy consumption information of the interface board that is on the link and that is located in the network device). That each network device advertises the energy consumption information of the network object related to the network device to the IGP network may include: The network device sends, to a neighboring device of the network device, an IGP packet including the energy consumption information of the network object related to the network device. After receiving the IGP packet sent by the network device, the neighboring device of the network device may add energy consumption information of a network object related to the neighboring device to the IGP packet, and send, to a neighboring device of the neighboring device, the IGP packet added with the energy consumption information of the network object related to the neighboring device. The process is repeated, and finally, the energy consumption information of the network object related to each network device can be advertised to the entire IGP network.

In an optional embodiment, that the network device obtains the status information of the network device includes: The network device detects whether a channelization module in the network device is in the sleep state, detects whether an NPU in the network device is in the warm backup state, and detects whether a redundant power supply in the network device is in the off state. If the channelization module in the network device is in the sleep state, the NPU in the network device is in the warm backup state, and the redundant power supply in the network device is in the off state, the network device determines that the network device is in the sleep state. Otherwise, the network device determines that the network device is in the wake-up state. That the network device obtains the energy consumption of the network device may include: The network device includes an energy consumption management module, and the energy consumption management module detects the energy consumption of the network device, and determines the energy consumption of the network device based on a detection result.

In an optional embodiment, that the network device obtains status information of any link related to the network device includes: The network device detects whether an interface board that is in the network device and that corresponds to the link is in the sleep state (for example, detects whether an NP chip, an optical-electrical conversion chip, a serial interface, or the like on the interface board is in the disabled state). If the interface board that is in the network device and that corresponds to the link is in the sleep state, the network device determines that the link is in the sleep state. Otherwise, the network device determines that the link is in the wake-up state. That the network device obtains the energy consumption of any link related to the network device includes: The network device includes the energy consumption management module, the energy consumption management module detects energy consumption of an interface board corresponding to the link, and determines, as the energy consumption of the link that is obtained by the network device, the energy consumption of the interface board corresponding to the link.

The following uses FIG. 14 as an example for description. The network device 101 may obtain energy consumption information of a network object related to the network device 101. The energy consumption information of the network object related to the network device 101 may include at least one of the following: energy consumption information of the network device 101, energy consumption information of an interface board that is in the network device 101 and that corresponds to a link L12, energy consumption information of an interface board that is in the network device 101 and that corresponds to a link L13, energy consumption information of an interface board that is in the network device 101 and that corresponds to a link L14, energy consumption information of an interface board that is in the network device 101 and that corresponds to a link L15, and energy consumption information of an interface board that is in the network device 101 and that corresponds to a link L17. The network device 102 may obtain energy consumption information of a network object related to the network device 102. The energy consumption information of the network object related to the network device 102 may include at least one of the following: energy consumption information of the network device 102, energy consumption information of an interface board that is in the network device 102 and that corresponds to the link L12, energy consumption information of an interface board that is in the network device 102 and that corresponds to a link L25, and energy consumption information of an interface board that is in the network device 102 and that corresponds to a link L26. Similarly, each of network devices 103 to 108 may obtain energy consumption information of a network object related to the network device.

Optionally, the network device 108 sends an IGP packet 1 to each of the network devices 105 to 107. The IGP packet 1 includes energy consumption information of a network object related to the network device 108. For example, the IGP packet 1 includes energy consumption information of the network device 108, energy consumption information of an interface board that is in the network device 108 and that corresponds to a link L58, energy consumption information of an interface board that is in the network device 108 and that corresponds to a link L68, and energy consumption information of an interface board that is in the network device 108 and that corresponds to a link L58. After receiving the IGP packet 1, the network device 105 may add energy consumption information of a network object related to the network device 105 to the IGP packet 1 to obtain an IGP packet 2, and send the IGP packet 2 to each of the network devices 101 to 103. The energy consumption information of the network object related to the network device 105 may include: energy consumption information of the network device 105, energy consumption information of an interface board that is in the network device 105 and that corresponds to the link L15, energy consumption information of an interface board that is in the network device 105 and that corresponds to the link L25, energy consumption information of an interface board that is in the network device 105 and that corresponds to a link L35, and energy consumption information of an interface board that is in the network device 105 and that corresponds to the link L58. After receiving the IGP packet 2, the network device 102 may add the energy consumption information of the network object related to the network device 102 to the IGP packet 2 to obtain an IGP packet 3, and send the IGP packet 3 to each of the network device 101 and the network device 106. The energy consumption information of the network obj ect related to the network device 102 may include: the energy consumption information of the network device 102, the energy consumption information of the interface board that is in the network device 102 and that corresponds to the link L12, the energy consumption information of the interface board that is in the network device 102 and that corresponds to the link L25, and the energy consumption information of the interface board that is in the network device 102 and that corresponds to the link L26. After receiving the IGP packet 3, the network device 101 may add the energy consumption information of the network object related to the network device 101 to the IGP packet 3 to obtain an IGP packet 4, and send the IGP packet 4 to each of network devices 103 to 105 and the network device 107. The energy consumption information of the network object related to the network device 101 may include: the energy consumption information of the network device 101, the energy consumption information of the interface board that is in the network device 101 and that corresponds to the link L12, the energy consumption information of the interface board that is in the network device 101 and that corresponds to the link L13, the energy consumption information of the interface board that is in the network device 101 and that corresponds to the link L14, the energy consumption information of the interface board that is in the network device 101 and that corresponds to the link L15, and the energy consumption information of the interface board that is in the network device 101 and that corresponds to the link L17. The process is repeated, and finally, each of network devices 101 to 108 may learn of energy consumption information of network objects related to the network devices 101 to 108. For example, the first network device is the network device 101, the first IGP packet may be the IGP packet 2 or the IGP packet 3. Energy consumption information of any link that is carried in the first IGP packet may include two parts. The two parts are energy consumption information of two interface boards at two ends of the link, and the two parts may be in two link energy consumption TLV fields.

S502: The first network device determines an optimal path from the first network device to a first egress device based on the energy consumption information of the network object in the IGP network, where the first egress device is an egress network device in the IGP network.

The first network device may obtain the energy consumption information of the network object in the IGP network from the first IGP packet, and then determine the optimal path from the first network device to the first egress device based on the energy consumption information of the network object in the IGP network. Optionally, for a link, if the first IGP packet includes two link energy consumption ILV fields (where the two link energy consumption ILV fields carry energy consumption information of interface boards at two ends of the link) corresponding to the link, the first network device determines energy consumption information of the link (that is, final energy consumption information of the link) based on the energy consumption information of the interface boards at two ends of the link that is carried in the two link energy consumption ILV fields. For example, if status information carried in at least one of the two link energy consumption ILV fields indicates that the link is in the sleep state, the first network device determines that the link is in the sleep state; or if status information carried in both the link energy consumption ILV fields indicates that the link is in the wake-up state, the first network device determines that the link is in the wake-up state. The first network device may determine, as the energy consumption of the link, a sum of link energy consumption carried in the two link energy consumption ILV fields.

In an optional embodiment, the first network device determines the optimal path from the first network device to the first egress device based on the energy consumption information of the network object in the IGP network, a first flexible algorithm, and a network topology of the IGP network. The first flexible algorithm includes a calculation type, a metric type, and constraints. The first flexible algorithm meets at least one of the following: The metric type of the first flexible algorithm includes an energy consumption metric; and the constraints of the first flexible algorithm include an energy consumption constraint condition. The energy consumption constraint condition may include at least one of a device energy consumption constraint condition and a link energy consumption constraint condition. The device energy consumption constraint condition may include: excluding a network device that does not meet a device energy consumption condition. The link energy consumption constraint condition may include: excluding a link that does not meet a link energy consumption condition. For example, the device energy consumption constraint condition includes at least one of the following: excluding a network device whose energy consumption is greater than a device energy consumption threshold, and excluding a network device in the sleep state. The link energy consumption constraint condition includes at least one of the following: excluding a link whose energy consumption is greater than a link energy consumption threshold, and excluding a link in the sleep state.

For example, FIG. 18 is a flowchart of a method for determining an optimal path from a first network device to a first egress device by the first network device according to an embodiment of this application. The method includes the following steps S5021 and S5022.

S5021: The first network device determines a pruned network topology based on energy consumption information of a network object in an IGP network, a metric type of a first flexible algorithm, constraints of the first flexible algorithm, and a network topology of the IGP network.

The first network device may prune the network topology of the IGP network based on the energy consumption information of the network object in the IGP network, the metric type of the first flexible algorithm, and the constraints of the first flexible algorithm, to obtain the pruned network topology. The pruned network topology may be a logical topology. The pruned network topology is obtained by pruning the network topology of the IGP network based on the first flexible algorithm. Therefore, the pruned network topology is also referred to as a logical topology corresponding to the first flexible algorithm.

In an optional embodiment, the first network device excludes, based on the metric type of the first flexible algorithm, a network object that does not include the metric type in the IGP network, and excludes, based on the constraints of the first flexible algorithm, a network object that does not meet the constraints of the first flexible algorithm in the IGP network. A network topology formed by remaining network objects is the pruned network topology. For example, the metric type of the first flexible algorithm is an energy consumption metric, and the constraints of the first flexible algorithm include: excluding a network device whose energy consumption is greater than a device energy consumption threshold, excluding a network device in a sleep state, excluding a link whose energy consumption is greater than a link energy consumption threshold, and excluding a link in the sleep state. In this case, the first network device excludes, based on the metric type of the first flexible algorithm, a network device that does not include energy consumption information and a link that does not include energy consumption information that are in the IGP network, and the first network device may exclude, based on the constraints of the first flexible algorithm, the network device in the sleep state, the link in the sleep state, a network device whose energy consumption is greater than a device energy consumption threshold, and a link whose energy consumption is greater than a link energy consumption threshold that are in the IGP network. A network obj ect that does not include the energy consumption information is a network object whose energy consumption information is unknown to the first network device when the first network device performs path calculation. For example, the network object that does not include the energy consumption information is a network object that does not advertise the energy consumption information to the IGP network. Optionally, when performing path calculation, the first network device does not know a status of a network object, and the first network device determines that the network object does not include status information; and when performing path calculation, the first network device does not know energy consumption of a network object, and the first network device determines that the network object does not include the energy consumption. In addition, it should be noted that when the first network device excludes a network device, although some links related to the network device include energy consumption information and meet a link energy consumption constraint condition, the first network device may also exclude the links. This is not limited in embodiments of this application.

In an example, the metric type of the first flexible algorithm is the energy consumption metric, and the constraints of the first flexible algorithm include: excluding the network device whose energy consumption is greater than the device energy consumption threshold, excluding the network device in the sleep state, excluding the link whose energy consumption is greater than the link energy consumption threshold, and excluding the link in the sleep state. In addition, the device energy consumption threshold is 200, and the link energy consumption threshold is 30. The IGP network shown in FIG. 14 is used as an example for description. It is assumed that all network devices 101 to 108 include the energy consumption information, a link 17 does not include the energy consumption information, all links except the link 17 include the energy consumption information, a network device 103 is in the sleep state, all network devices except the network device 103 are in a wake-up state, a link 15 is in the sleep state, all links except the link 15 are in the wake-up state, energy consumption of a network device 105 is 300, energy consumption of each of network devices except the network device 105 is 100, energy consumption of a link L13 is 50, energy consumption of a link 47 is 25, and energy consumption of each of links except the link 13 and the link 47 is 20.

An example in which the first network device is the network device 101 is used. The network device 101 excludes, based on the metric type of the first flexible algorithm, the link 17 that does not include the energy consumption information. In addition, the network device 101 excludes, based on the constraints of the first flexible algorithm, the network device 103 in the sleep state, the link 15 in the sleep state, the network device 105 whose energy consumption is greater than 200, and the link L13 whose energy consumption is greater than 30. In addition, although each of a link L35, a link L36, and a link L37 that are related to the network device 103 includes the energy consumption information and meets the constraints of the first flexible algorithm, the network device 101 may also exclude the link L35, the link L36, and the link L37 when excluding the network device 103. Similarly, although each of the link L35, a link L25, and a link L58 that are related to the network device 105 includes the energy consumption information and meets the constraints of the first flexible algorithm, the network device 101 may also exclude the link L35, the link L25, and the link L58 when excluding the network device 105. The pruned network topology (that is, the logical topology corresponding to the first flexible algorithm) determined finally by the network device 101 may be shown in FIG. 19.

S5022: The first network device determines the optimal path from the first network device to the first egress device based on energy consumption information of a network object in the pruned network topology, a calculation type of the first flexible algorithm, the metric type of the first flexible algorithm, and the pruned network topology.

Optionally, the calculation type of the first flexible algorithm is an SPF algorithm or a strict-SPF algorithm, and the metric type of the first flexible algorithm is the energy consumption metric. The first network device determines, in the pruned network topology based on the energy consumption information of the network object in the pruned network topology, the calculation type of the first flexible algorithm, and the metric type of the first flexible algorithm, shortest paths with lowest energy consumption from the first network device to the first egress device, and the first network device determines the shortest paths with lowest energy consumption as the optimal path from the first network device to the first egress device. The pruned network topology includes at least some network objects in the IGP network. There may be at least one optimal path from the first network device to the first egress device, and the at least one optimal path may form one optimal path tree. Therefore, that the first network device determines the optimal path from the first network device to the first egress device is that the first network device determines an optimal path tree from the first network device to the first egress device.

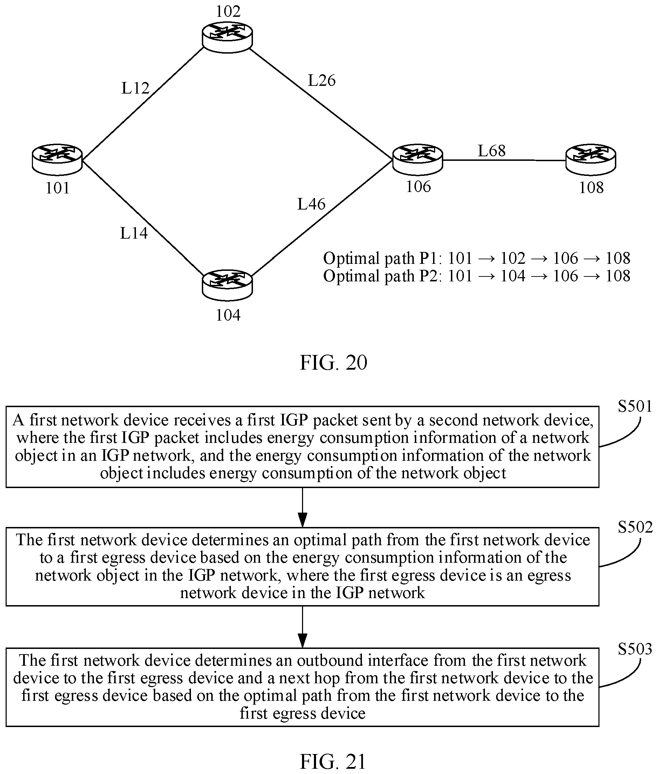

In an example, a pruned network topology is shown in FIG. 19. Energy consumption of a link 47 is 25, and energy consumption of each of other links is 20. It is assumed that the first egress device is a network device 108. An example in which the first network device is a network device 101 is still used. In a process in which the network device 101 determines an optimal path tree from the network device 101 to the network device 108 based on energy consumption information of a network object in the pruned network topology, a calculation type of a first flexible algorithm, a metric type of the first flexible algorithm, and the pruned network topology, a path on which the link 47 is located is excluded, and an optimal path tree that is from the network device 101 to the network device 108 and that is finally determined by the network device 101 is shown in FIG. 20. The optimal path tree includes an optimal path P1 and an optimal path P2.

The foregoing embodiment is described by using an example in which the first network device determines the optimal path from the first network device to the first egress device. Any network device in the IGP network may determine an optimal path from the network device to another network device (which may be the first egress device or may not be the first egress device) in the IGP network. For a specific implementation process, refer to an implementation process in which the first network device determines the optimal path from the first network device to the first egress device. Details are not described herein again.

In conclusion, in the path calculation method provided in this embodiment of this application, the first network device in the IGP network determines the optimal path from the first network device to the first egress device based on the energy consumption information of the network object in the IGP network, where the energy consumption information of the network object includes the energy consumption of the network object. Therefore, the energy consumption of the optimal path that is from the first network device to the first egress device and that is determined by the first network device is low. This helps reduce energy consumption of service transmission and can meet a requirement of a green and energy-saving network. In the technical solutions provided in this embodiment of this application, flooding energy consumption information of the network device in the IGP network at a granularity of the network device and flooding energy consumption information of the link in the IGP network at a granularity of the link are supported, so that an optimal path can be calculated based on the energy consumption information of the network device and the energy consumption information of the link, to ensure that energy consumption of the calculated optimal path is low.

In an optional embodiment, FIG. 21 is a flowchart of another path calculation method according to an embodiment of this application. After S502, the path calculation method further includes the following step S503.

S503: A first network device determines an outbound interface from the first network device to a first egress device and a next hop from the first network device to the first egress device based on an optimal path from the first network device to the first egress device.

Optionally, the first network device determines the outbound interface from the first network device to the first egress device and the next hop from the first network device to the first egress device based on an optimal path tree from the first network device to the first egress device and a cost of a link in the optimal path tree. The example in which the first network device is the network device 101, and the first egress device is the network device 108 is still used. An optimal path tree from the network device 101 to the network device 108 is shown in FIG. 20. It is assumed that a cost of a link L12 is 50, and a cost of a link L14 is 100. In this case, the network device 101 determines that the link L12 is a link that needs to be passed through from the network device 101 to the network device 108. Then, the network device 101 determines that an outbound interface from the network device 101 to the network device 108 is an interface that is in the network device 101 and that corresponds to the link L12, and a next hop from the network device 101 to the network device 108 is a network device 102.

In an optional embodiment, before the first network device calculates the optimal path based on the first flexible algorithm (for example, before S502), a flexible algorithm capability of the first network device may be configured manually or by a controller, so that the first network device supports the first flexible algorithm. For example, refer to FIG. 14. A flexible algorithm capability of each of network devices 101 to 108 may be configured manually or by the controller, so that the network devices 101 to 108 all support the first flexible algorithm. Each of the network devices 101 to 108 may advertise the flexible algorithm capability of the network device in an IGP network. For example, each of the network devices 101 to 108 advertises, to the entire IGP network, indication information of the first flexible algorithm supported by the network device. The indication information of the first flexible algorithm may be an ID of the first flexible algorithm.

In an optional embodiment, before the first network device calculates the optimal path based on the first flexible algorithm (for example, before S502), the first flexible algorithm may be defined, in the IGP network, manually or by the controller. For example, the first flexible algorithm is defined in at least one network device in the IGP network, and the at least one network device advertises the first flexible algorithm to the entire IGP network. In this way, each network device in the entire IGP network can learn of the first flexible algorithm.

In this embodiment of this application, an example in which the first flexible algorithm is defined in the first network device is used for description. Optionally, in the first network device, a calculation type of the first flexible algorithm is defined as an SPF algorithm, a metric type of the first flexible algorithm is defined as an energy consumption metric, constraints of the first flexible algorithm are defined as an energy consumption constraint condition. In addition, the energy consumption constraint condition includes at least one of a device energy consumption constraint condition and a link energy consumption constraint condition. The device energy consumption constraint condition includes at least one of the following: excluding a network device whose energy consumption is greater than a device energy consumption threshold, and excluding a network device in a sleep state. The link energy consumption constraint condition includes at least one of the following: excluding a link whose energy consumption is greater than a link energy consumption threshold, and excluding a link in the sleep state.

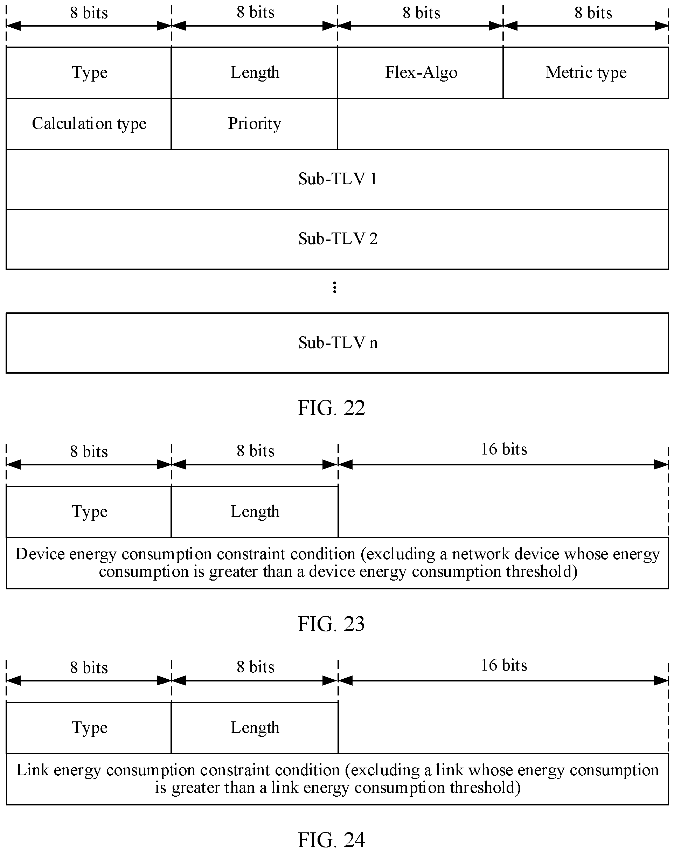

After the first flexible algorithm is defined in the first network device, the first network device may advertise the first flexible algorithm to the entire IGP network. Optionally, the first network device sends an IGP packet to the IGP network, where the IGP packet includes an FAD field, and the FAD field carries content of the first flexible algorithm. In an example, the FAD field is shown in FIG. 22. The FAD field includes a type field, a length field, a Flex-Algo field, a metric type field, a calculation type field, a priority (priority) field, and a plurality of sub-TLV fields (where in FIG. 22, n sub-TLV fields are used as an example for description). The Flex-Algo field, the metric type field, the calculation type field, the priority field, and the plurality of sub-TLV fields form a value field of the FAD field. All the sub-TLV fields are optional fields, and a quantity of sub-TLV fields may be flexibly set. The type field is used to carry a type of the FAD field. The length field is used to carry a length of the value field of the FAD field. The Flex-Algo field is used to carry the indication information (for example, the ID of the first flexible algorithm) of the first flexible algorithm. The metric type field is used to carry a metric type of the first flexible algorithm. The calculation type field is used to carry a calculation type of the first flexible algorithm. The sub-TLV field is used to carry constraints of the first flexible algorithm. The priority field is used to carry a priority, and the priority field is effective for a receiver of the FAD field. When a receiver receives a plurality of FAD fields that carry a same Flex-Algo ID, if content of flexible algorithms defined by the plurality of FAD fields is different, the receiver uses a flexible algorithm carried in an FAD field with a high priority.

An example in which the constraints of the first flexible algorithm include the device energy consumption constraint condition and the link energy consumption constraint condition, the device energy consumption constraint condition includes excluding the network device whose energy consumption is greater than the device energy consumption threshold, and the link energy consumption constraint condition includes excluding the link whose energy consumption is greater than the link energy consumption threshold is used. In the FAD field shown in FIG. 22, a sub-TLV field used to carry the device energy consumption constraint condition may be shown in FIG. 23, and a sub-TLV field used to carry the link energy consumption constraint condition may be shown in FIG. 24. For ease of description, the sub-TLV field used to carry the device energy consumption constraint condition is called a device energy consumption constraint sub-TLV field, and the sub-TLV field used to carry the link energy consumption constraint condition is called a link energy consumption constraint sub-TLV field. Refer to FIG. 23. A device energy consumption constraint sub-TLV field includes a type field, a length field, and a device energy consumption constraint condition field. The type field is used to carry a type of the device energy consumption constraint sub-TLV field, the length field is used to carry a length of a value field of the device energy consumption constraint sub-TLV field, and the device energy consumption constraint condition field is used to carry a device energy consumption constraint condition. A length of the device energy consumption constraint condition field is variable. Refer to FIG. 24. A link energy consumption constraint sub-TLV field includes a type field, a length field, and a link energy consumption constraint condition field. The type field is used to carry a type of the link energy consumption constraint sub-TLV field, the length field is used to carry a length of a value field of the link energy consumption constraint sub-TLV field, and the link energy consumption constraint condition field is used to carry a link energy consumption constraint condition. A length of the link energy consumption constraint condition field is variable.

In this embodiment of this application, the network device in the IGP network may dynamically adjust a status of the network device, and advertise the status of the network device to the IGP network, to implement energy saving of the network device. For example, a network device in a wake-up state in the IGP network may enter a sleep state when the network device meets a device sleep condition, and advertise, to the IGP network, that the network device is in the sleep state. A network device in the sleep state in the IGP network may enter the wake-up state when the network device meets a device wake-up condition, and advertise, to the IGP network, that the network device is in the wake-up state. The device sleep condition includes at least one of the following: A device sleep moment is reached, and a ratio of energy consumption of a network device to traffic of the network device reaches a device sleep threshold (for example, the ratio of the energy consumption of the network device to the traffic of the network device is greater than the device sleep threshold). The device wake-up condition includes at least one of the following: A device wake-up moment is reached, and the ratio of the energy consumption of the network device to the traffic of the network device reaches a device wake-up threshold (for example, the ratio of the energy consumption of the network device to the traffic of the network device is less than the device wake-up threshold). Optionally, the device sleep threshold and the device wake-up threshold are a same threshold.

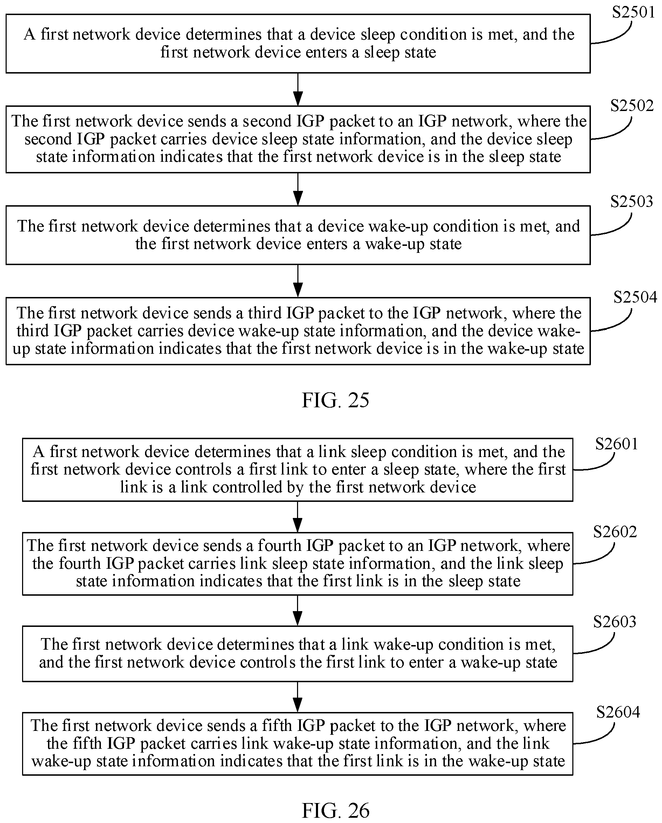

An example in which the first network device dynamically adjusts the status of the first network device is used for description. A procedure of a method for dynamically adjusting a status of a first network device by the first network device is shown in FIG. 25. The method includes the following steps S2501 to S2504.

S2501: The first network device determines that a device sleep condition is met, and the first network device enters a sleep state.

When the first network device is in a wake-up state, the first network device may detect in real time or periodically whether the first network device meets the device sleep condition. If the first network device determines that the first network device meets the device sleep condition, the first network device enters the sleep state. Optionally, the first network device performs at least one of the following to enter the sleep state: controlling a channelization module in the first network device to enter the sleep state, controlling an NPU in the first network device to enter a warm backup state, controlling a fabric unit in the first network device to enter the warm backup state, and turning off a redundant power supply in the first network device.

In this embodiment of this application, the device sleep condition of the first network device includes at least one of the following: A device sleep moment is reached, and a ratio of energy consumption of the first network device to traffic of the first network device reaches a device sleep threshold (for example, the ratio of the energy consumption of the first network device to the traffic of the first network device is greater than the device sleep threshold). The device sleep threshold may be manually set, may be determined by the first network device based on energy consumption distribution of the first network device and traffic distribution of the first network device, or may be determined by a controller based on energy consumption distribution of at least one network device and traffic distribution of the at least one network device. A manner of determining the device sleep threshold is not limited in this embodiment of this application. Energy consumption distribution of any network device is distribution of energy consumption of the network device with time, and may be represented by using a two-dimensional curve of time and energy consumption. Traffic distribution of any network device is distribution of traffic of the network device with time, and may be represented by using a two-dimensional curve of time and traffic. Optionally, the device sleep threshold is determined based on a ratio of an average value of energy consumption of at least one network device in a fixed period of time to an average value of traffic of the at least one network device in the fixed period of time. For example, the fixed period of time is 8:00 to 22:00, and the device sleep threshold is twice the ratio.

In an optional embodiment, the first network device detects in real time or periodically whether the device sleep moment is reached, and if the first network device determines that the device sleep moment is reached, the first network device determines that the first network device meets the device sleep condition; and/or the first network device obtains the ratio of the energy consumption of the first network device to the traffic of the first network device in real time or periodically, and detects whether the ratio of the energy consumption of the first network device to the traffic of the first network device reaches the device sleep threshold, and if the first network device determines that the ratio of the energy consumption of the first network device to the traffic of the first network device reaches the device sleep threshold, the first network device determines that the first network device meets the device sleep condition. If the first network device determines that the device sleep moment is not reached, and the ratio of the energy consumption of the first network device to the traffic of the first network device does not reach the device sleep threshold, the first network device determines that the first network device does not meet the device sleep condition, and the first network device keeps in the wake-up state.

S2502: The first network device sends a second IGP packet to the IGP network, where the second IGP packet carries device sleep state information, and the device sleep state information indicates that the first network device is in the sleep state.

The first network device may first generate the second IGP packet, and then send the second IGP packet to the IGP network. That the first network device sends the second IGP packet to the IGP network means that the first network device sends the second IGP packet to a network device in the IGP network. For example, the first network device sends the second IGP packet to a neighboring device of the first network device. After receiving the second IGP packet, the neighboring device of the first network device sends the second IGP packet to a neighboring device of the neighboring device. The rest is deduced by analogy.

In this embodiment of this application, the second IGP packet carries the device sleep state information, to indicate that the first network device is in the sleep state. The second IGP packet may further carry indication information of the first network device, to indicate the first network device. For example, the second IGP packet is a link state packet. For example, the second IGP packet is an LSA packet in an OSPF protocol or an LSP packet in an IS-IS protocol. The second IGP packet may include a device energy consumption TLV field shown in FIG. 16, and a value of an S field in the device energy consumption TLV field is the device sleep state information (for example, 0), indicating that the first network device is in the sleep state.

S2503: The first network device determines that a device wake-up condition is met, and the first network device enters the wake-up state.

When the first network device is in the sleep state, the first network device may detect in real time or periodically whether the first network device meets the device wake-up condition, and if the first network device determines that the first network device meets the device wake-up condition, the first network device enters the wake-up state. Optionally, the first network device performs the following operations to enter the wake-up state: controlling the channelization module in the first network device to enter the wake-up state, controlling the NPU in the first network device to enter a hot backup state, controlling the fabric unit in the first network device to enter the hot backup state, and turning on the redundant power supply (for example, a backup power supply) in the first network device.

In this embodiment of this application, the device wake-up condition of the first network device includes at least one of the following: A device wake-up moment is reached, and the ratio of the energy consumption of the first network device to the traffic of the first network device reaches a device wake-up threshold (for example, the ratio of the energy consumption of the first network device to the traffic of the first network device is less than the device wake-up threshold). The device wake-up threshold may be manually set, may be determined by the first network device based on the energy consumption distribution of the first network device and the traffic distribution of the first network device, or may be determined by the controller based on energy consumption distribution of at least one network device and traffic distribution of the at least one network device. A manner of determining the device wake-up threshold is not limited in this embodiment of this application. Optionally, the device wake-up threshold is determined based on a ratio of an average value of energy consumption of at least one network device in a fixed period of time to an average value of traffic of the at least one network device in the fixed period of time. For example, the fixed period of time is 8:00 to 22:00, and the device wake-up threshold is twice the ratio.

In an optional embodiment, the first network device detects in real time or periodically whether the device wake-up moment is reached, and if the first network device determines that the device wake-up moment is reached, the first network device determines that the first network device meets the device wake-up condition; and/or the first network device obtains the ratio of the energy consumption of the first network device to the traffic of the first network device in real time or periodically, and detects whether the ratio of the energy consumption of the first network device to the traffic of the first network device reaches the device wake-up threshold, and if the first network device determines that the ratio of the energy consumption of the first network device to the traffic of the first network device reaches the device wake-up threshold, the first network device determines that the first network device meets the device wake-up condition. If the first network device determines that the device wake-up moment is not reached, and the ratio of the energy consumption of the first network device to the traffic of the first network device does not reach the device wake-up threshold, the first network device determines that the first network device does not meet the device wake-up condition, and the first network device keeps in the sleep state.

S2504: The first network device sends a third IGP packet to the IGP network, where the third IGP packet carries device wake-up state information, and the device wake-up state information indicates that the first network device is in the wake-up state.

The first network device may first generate the third IGP packet, and then send the third IGP packet to the IGP network.

In this embodiment of this application, the third IGP packet carries the device wake-up state information, to indicate that the first network device is in the wake-up state. The third IGP packet may further carry the indication information of the first network device, to indicate the first network device. For example, the third IGP packet is a link state packet. For example, the third IGP packet is an LSA packet in the OSPF protocol or an LSP packet in the IS-IS protocol. The third IGP packet may include the device energy consumption TLV field shown in FIG. 16, and the value of the S field in the device energy consumption TLV field is the device wake-up state information (for example, 1), indicating that the first network device is in the wake-up state.

In this embodiment of this application, the network device in the IGP network may dynamically adjust a status of a link related to the network device, and advertise the status of the link to the IGP network, to implement energy saving of the link. For example, when any link that is in the wake-up state and that is related to the network device meets a link sleep condition, the network device in the IGP network may control the link to enter the sleep state, and advertise, to the IGP network, that the link is in the sleep state. In addition, when any link that is in the sleep state and that is related to the network device meets a link wake-up condition, the network device in the IGP network may control the link to enter the wake-up state, and advertise, to the IGP network, that the link is in the wake-up state. The link sleep condition includes at least one of the following: A link sleep moment is reached, and a ratio of energy consumption of a link to traffic of the link reaches a link sleep threshold (for example, the ratio of the energy consumption of the link to the traffic of the link is greater than the link sleep threshold). The link wake-up condition includes at least one of the following: A link wake-up moment is reached, and the ratio of the energy consumption of the link to the traffic of the link reaches a link wake-up threshold (for example, the ratio of the energy consumption of the link to the traffic of the link is less than the link wake-up threshold). Optionally, the link sleep threshold and the link wake-up threshold are a same threshold.

An example in which the first network device dynamically adjusts a status of a first link is used for description. A procedure of a method for dynamically adjusting a status of a first link by a first network device is shown in FIG. 26. The method includes the following steps S2601 to S2604.

S2601: The first network device determines that a link sleep condition is met, and the first network device controls the first link to enter a sleep state, where the first link is a link controlled by the first network device.

Optionally, one end of the first link is an interface board in the first network device. When the first link is in a wake-up state, the first network device may detect in real time or periodically whether the first link meets the link sleep condition. If the first network device determines that the first link meets the link sleep condition, the first network device controls the first link to enter the sleep state. Optionally, the first network device controls, to enter the sleep state, an interface board that is in the first network device and that corresponds to the first link. For example, the first network device performs at least one of the following to control the first link to enter the sleep state: controlling, to enter a disabled state, an NP chip on the interface board that is in the first network device and that corresponds to the first link, controlling, to enter the disabled state, an optical-electrical conversion chip on the interface board that is in the first network device and that corresponds to the first link, and controlling, to enter the disabled state, a serial interface on the interface board that is in the first network device and that corresponds to the first link.

In this embodiment of this application, the link sleep condition of the first link includes at least one of the following: A link sleep moment is reached, and a ratio of energy consumption of the first link to traffic of the first link reaches a link sleep threshold (for example, the ratio of the energy consumption of the first link to the traffic of the first link is greater than the link sleep threshold). The link sleep threshold may be manually set, may be determined by the first network device based on energy consumption distribution of the first link and traffic distribution of the first link, or may be determined by a controller based on energy consumption distribution of at least one link and traffic distribution of the at least one link. A manner of determining the link sleep threshold is not limited in this embodiment of this application. Energy consumption distribution of any link is distribution of energy consumption of the link with time, and may be represented by using a two-dimensional curve of time and energy consumption. Traffic distribution of any link is distribution of traffic of the link with time, and may be represented by using a two-dimensional curve of time and traffic. Optionally, the link sleep threshold is determined based on a ratio of an average value of energy consumption of at least one link in a fixed period of time to an average value of traffic of the at least one link in the fixed period of time. For example, the fixed period of time is 8:00 to 22:00, and the link sleep threshold is twice the ratio.

In an optional embodiment, the first network device detects in real time or periodically whether the link sleep moment is reached, and if the first network device determines that the link sleep moment is reached, the first network device determines that the first link meets the link sleep condition; and/or the first network device obtains the ratio of the energy consumption of the first link to the traffic of the first link in real time or periodically, and detects whether the ratio of the energy consumption of the first link to the traffic of the first link reaches the link sleep threshold, and if the first network device determines that the ratio of the energy consumption of the first link to the traffic of the first link reaches the link sleep threshold, the first network device determines that the first link meets the link sleep condition. If the first network device determines that the link sleep moment is not reached, and the first network device determines that the ratio of the energy consumption of the first link to the traffic of the first link does not reach the link sleep threshold, the first network device determines that the first link does not meet the link sleep condition, and the first network device controls the first link to keep in the wake-up state. The energy consumption of the first link that is obtained by the first network device may be energy consumption of an interface board that is in the first network device and that corresponds to the first link, and the traffic of the first link that is obtained by the traffic of the first link may be traffic of an interface that is in the first network device and that corresponds to the first link. That the first network device detects whether the first link meets the link sleep condition may include: The first network device detects whether the interface board that is in the first network device and that corresponds to the first link meets the link sleep condition.

S2602: The first network device sends a fourth IGP packet to an IGP network, where the fourth IGP packet carries link sleep state information, and the link sleep state information indicates that the first link is in the sleep state.

The first network device may first generate the fourth IGP packet, and then send the fourth IGP packet to the IGP network.

In this embodiment of this application, the fourth IGP packet carries the link sleep state information, to indicate that the first link is in the sleep state. The fourth IGP packet may further carry indication information of the first link, to indicate the first link. For example, the fourth IGP packet carries indication information of the interface board that is in the first network device and that corresponds to the first link. For example, the fourth IGP packet is a link state packet. For example, the fourth IGP packet is an LSA packet in an OSPF protocol or an LSP packet in an IS-IS protocol. The fourth IGP packet may include a link energy consumption TLV field shown in FIG. 17, and a value of an S field in the link energy consumption TLV field is the link sleep state information (for example, 0), indicating that the first link is in the sleep state.

S2603: The first network device determines that a link wake-up condition is met, and the first network device controls the first link to enter the wake-up state.

When the first link is in the sleep state, the first network device may detect in real time or periodically whether the first link meets the link wake-up condition. If the first network device determines that the first link meets the link wake-up condition, the first network device controls the first link to enter the wake-up state. Optionally, the first network device controls, to enter the wake-up state, the interface board that is in the first network device and that corresponds to the first link. For example, the first network device controls, to enter an enabled state, an NP chip, an optical-electrical conversion chip, and a serial interface on the interface board that is in the first network device and that corresponds to the first link, to control the first link to enter the wake-up state.

In this embodiment of this application, the link wake-up condition of the first link includes at least one of the following: A link wake-up moment is reached, and the ratio of the energy consumption of the first link to the traffic of the first link reaches a link wake-up threshold (for example, the ratio of the energy consumption of the first link to the traffic of the first link is less than the link sleep threshold). The link wake-up threshold may be manually set, may be determined by the first network device based on energy consumption distribution of the first link and traffic distribution of the first link, or may be determined by the controller based on energy consumption distribution of at least one link and traffic distribution of the at least one link. A manner of determining the link wake-up threshold is not limited in this embodiment of this application. Optionally, the link wake-up threshold is determined based on a ratio of an average value of energy consumption of at least one link in a fixed period of time to an average value of traffic of the at least one link in the fixed period of time. For example, the fixed period of time is 8:00 to 22:00, and the link wake-up threshold is twice the ratio.

In an optional embodiment, the first network device detects in real time or periodically whether the link wake-up moment is reached, and if the first network device determines that the link wake-up moment is reached, the first network device determines that the first link meets the link wake-up condition; and/or the first network device obtains the ratio of the energy consumption of the first link to the traffic of the first link in real time or periodically, and detects whether the ratio of the energy consumption of the first link to the traffic of the first link reaches the link wake-up threshold, and if the first network device determines that the ratio of the energy consumption of the first link to the traffic of the first link reaches the link wake-up threshold, the first network device determines that the first link meets the link wake-up condition. If the first network device determines that the link wake-up moment is not reached, and the first network device determines that the ratio of the energy consumption of the first link to the traffic of the first link does not reach the link wake-up threshold, the first network device determines that the first link does not meet the link wake-up condition, and the first network device controls the first link to keep in the sleep state.

S2604: The first network device sends a fifth IGP packet to the IGP network, where the fifth IGP packet carries link wake-up state information, and the link wake-up state information indicates that the first link is in the wake-up state.

The first network device may first generate the fifth IGP packet, and then send the fifth IGP packet to the IGP network.

In this embodiment of this application, the fifth IGP packet carries the link wake-up state information, to indicate that the first link is in the wake-up state. The fifth IGP packet may further carry indication information of the first link, to indicate the first link. For example, the fourth IGP packet carries the indication information of the interface board that is in the first network device and that corresponds to the first link. For example, the fifth IGP packet is a link state packet. For example, the fifth IGP packet is an LSA packet in the OSPF protocol or an LSP packet in the IS-IS protocol. The fifth IGP packet may include the link energy consumption TLV field shown in FIG. 17, and the value of the S field in the link energy consumption TLV field is the link wake-up state information (for example, 1), indicating that the first link is in the sleep state.

It can be learned from the descriptions of the foregoing embodiments that the network device is in the sleep state in a period of time between the device sleep moment and the device wake-up moment. For ease of description, the period of time between the device sleep moment and the device wake-up moment is referred to as a device sleep period of time. The following describes a manner of determining the device sleep period of time.

In an optional embodiment, a device sleep period of time is configured, in a network device, manually or by a controller. Usually, in the daytime, a user is active, and network traffic is large; and at night, the user is silent, and the network traffic is small. Therefore, the device sleep period of time may be configured, in the network device, manually or by the controller as the night. For example, the device sleep period of time is configured, in the network device, manually or by the controller as 0:00 to 5:00 (that is, 0 a.m. to 5 a.m.).

In another optional embodiment, the device sleep period of time is determined based on a device sleep model. For example, the device sleep period of time is determined by the network device based on the device sleep model, or is determined by the controller based on the device sleep model and delivered to the network device. Optionally, the device sleep period of time is determined by the network device based on the device sleep model. The device sleep model may be trained by the network device, or may be transplanted to the network device after being trained by the controller or another computer device. An input parameter of the device sleep model may be a network traffic feature, and an output parameter may be the device sleep period of time. An example in which the controller trains the device sleep model is used for description. The controller may control the network device to collect network traffic features in a plurality of periods of time (for example, collect a network traffic feature on the network device), and report the network traffic features and collection periods of time of the network traffic features to the controller. The controller performs model training by using the plurality of collection periods of time and the network traffic features in the plurality of collection periods of time as sample data, to obtain the device sleep model.

It can be learned from the descriptions of the foregoing embodiments that the link is in the sleep state in a period of time between the link sleep moment and the link wake-up moment. For ease of description, the period of time between the link sleep moment and the link wake-up moment is referred to as a link sleep period of time. The following describes a manner of determining the link sleep period of time.

In an optional embodiment, a link sleep period of time is configured, in a network device, manually or by a controller. For example, the link sleep period of time is configured, in the network device, manually or by the controller as 0:00 to 5:00.

In another optional embodiment, the link sleep period of time is determined based on a link sleep model. For example, the link sleep period of time is determined by the network device based on the link sleep model, or is determined by the controller based on the link sleep model and delivered to the network device. An input parameter of the link sleep model may be a network traffic feature, and an output parameter may be the link sleep period of time. An example in which the controller trains the link sleep model is used for description. The controller may control the network device to collect network traffic features of at least one link in a plurality of periods of time, and report the network traffic features and collection periods of time of the network traffic features to the controller. The controller performs model training by using the plurality of collection periods of time and the network traffic features in the plurality of collection periods of time as sample data, to obtain the link sleep model. In an optional embodiment, the link sleep period of time is the same as the device sleep period of time, and the link sleep model is the same as the device sleep model. This is not limited in embodiments of this application.

The foregoing describes the method embodiments of this application. The following describes apparatus embodiments of this application. The apparatuses in this application may be configured to perform the methods in this application. For details that are not disclosed in the apparatus embodiments, refer to the method embodiments.

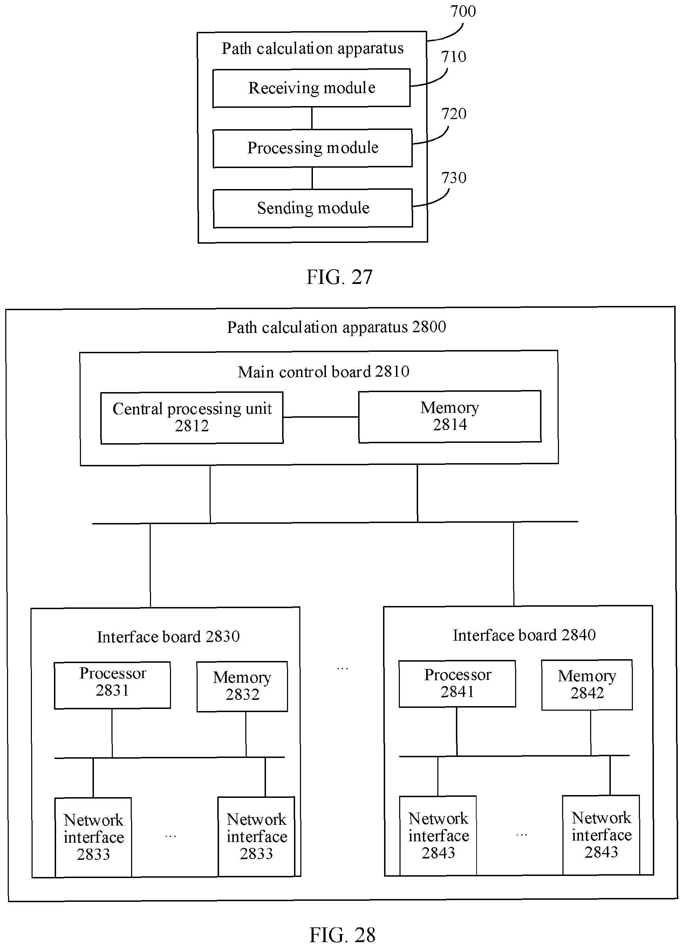

FIG. 27 is a schematic diagram of a structure of a path calculation apparatus 700 according to an embodiment of this application. The path calculation apparatus 700 is used in a first network device in an IGP network. For example, the path calculation apparatus 700 is the first network device or a functional component of the first network device. Refer to FIG. 27. The path calculation apparatus 700 includes:
a receiving module 710, configured to receive a first IGP packet sent by a second network device, where the first IGP packet includes energy consumption information of a network object in the IGP network, and the energy consumption information of the network object includes energy consumption of the network object. For function implementation of the receiving module 710, refer to the related descriptions in S501.

A processing module 720 is configured to determine an optimal path from the first network device to a first egress device based on the energy consumption information of the network object in the IGP network, where the first egress device is an egress network device in the IGP network. For function implementation of the processing module 720, refer to the related descriptions in S502.

Optionally, the network object includes at least one of a network device in the IGP network and a link in the IGP network.

Optionally, energy consumption of the network device in the IGP network is determined based on at least one of the following factors: a processing component in the network device, a temperature adjustment component in the network device, and an environment in which the network device is located. Energy consumption of the link in the IGP network is determined based on at least one of the following factors: an NP chip corresponding to the link, an optical-electrical conversion chip corresponding to the link, and a serial interface corresponding to the link.

Optionally, the energy consumption information of the network object further includes status information of the network object, where the status information indicates a status of the network object, and the status of the network object includes a sleep state or a wake-up state.

Optionally, the processing module 720 is configured to determine the optimal path from the first network device to the first egress device based on the energy consumption information of the network object in the IGP network, a first flexible algorithm, and a network topology of the IGP network.

Optionally, the processing module 720 is configured to: determine a pruned network topology based on the energy consumption information of the network object in the IGP network, a metric type of the first flexible algorithm, constraints of the first flexible algorithm, and the network topology of the IGP network; and determine the optimal path from the first network device to the first egress device based on energy consumption information of a network object in the pruned network topology, a calculation type of the first flexible algorithm, the metric type of the first flexible algorithm, and the pruned network topology.

Optionally, the first flexible algorithm meets at least one of the following: The metric type of the first flexible algorithm includes an energy consumption metric; and the constraints of the first flexible algorithm include an energy consumption constraint condition.

Optionally, the energy consumption constraint condition includes at least one of a device energy consumption constraint condition and a link energy consumption constraint condition. The device energy consumption constraint condition includes: excluding a network device that does not meet a device energy consumption condition. The link energy consumption constraint condition includes: excluding a link that does not meet a link energy consumption condition.

Optionally, the device energy consumption constraint condition includes at least one of the following: excluding a network device whose energy consumption is greater than a device energy consumption threshold, and excluding a network device in the sleep state. The link energy consumption constraint condition includes at least one of the following: excluding a link whose energy consumption is greater than a link energy consumption threshold, and excluding a link in the sleep state.

Optionally, the processing module 720 is further configured to: determine that a device sleep condition is met, and control the first network device to enter the sleep state, where the device sleep condition includes at least one of the following: A device sleep moment is reached, and a ratio of energy consumption of the first network device to traffic of the first network device reaches a device sleep threshold. For the function implementation of the processing module 720, further refer to the related descriptions in S2501.

The path calculation apparatus 700 further includes: a sending module 730, configured to send a second IGP packet to the IGP network, where the second IGP packet carries device sleep state information, and the device sleep state information indicates that the first network device is in the sleep state. For function implementation of the sending module 730, further refer to the related descriptions in S2502.

Optionally, the processing module 720 is further configured to: determine that a device wake-up condition is met, and control the first network device to enter the wake-up state, where the device wake-up condition includes at least one of the following: A device wake-up moment is reached, and the ratio of the energy consumption of the first network device to the traffic of the first network device reaches a device wake-up threshold. For the function implementation of the processing module 720, further refer to the related descriptions in S2503.

The sending module 730 is further configured to send a third IGP packet to the IGP network, where the third IGP packet carries device wake-up state information, and the device wake-up state information indicates that the first network device is in the wake-up state. For the function implementation of the sending module 730, further refer to the related descriptions in S2504.

Optionally, the processing module 720 is further configured to: determine that a link sleep condition is met, and control the first link to enter the sleep state, where the first link is a link controlled by the first network device, and the link sleep condition includes at least one of the following: A link sleep moment is reached, and a ratio of energy consumption of a first link to traffic of the first link reaches a link sleep threshold. For the function implementation of the processing module 720, further refer to the related descriptions in S2601.

The path calculation apparatus 700 further includes: the sending module 730, configured to send a fourth IGP packet to the IGP network, where the fourth IGP packet carries link sleep state information, and the link sleep state information indicates that the first link is in the sleep state. For the function implementation of the sending module 730, further refer to the related descriptions in S2601.

Optionally, the processing module 720 is further configured to: determine that a link wake-up condition is met, and control the first link to enter the wake-up state, where the link wake-up condition includes at least one of the following: A link wake-up moment is reached, and the ratio of the energy consumption of a first link to the traffic of the first link reaches a link wake-up threshold. For the function implementation of the processing module 720, further refer to the related descriptions in S2603.

The sending module 730 is further configured to send a fifth IGP packet to the IGP network, where the fifth IGP packet carries link wake-up state information, and the link wake-up state information indicates that the first link is in the wake-up state. For the function implementation of the sending module 730, further refer to the related descriptions in S2604.

In conclusion, in the path calculation apparatus provided in embodiments of this application, the first network device in the IGP network determines the optimal path from the first network device to the first egress device based on the energy consumption information of the network object in the IGP network, where the energy consumption information of the network object includes the energy consumption of the network object. Therefore, the energy consumption of the optimal path that is from the first network device to the first egress device and that is determined by the first network device is low. This helps reduce energy consumption of service transmission and can meet a requirement of a green and energy-saving network.

The path calculation apparatus provided in embodiments of this application may alternatively be implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. Alternatively, the method provided in the foregoing method embodiments may be implemented by using software. When the path calculation method provided in the foregoing method embodiments is implemented by using the software, modules in the foregoing path calculation apparatus may alternatively be software modules.

FIG. 28 is a schematic diagram of a structure of a path calculation apparatus 2800 according to an embodiment of this application. The path calculation apparatus 2800 is a network device or a functional component in the network device. The path calculation apparatus 2800 includes a main control board 2810, an interface board 2830, and an interface board 2840. In a case of a plurality of interface boards, a switch fabric unit (not shown in FIG. 28) is further included. The switch fabric unit is configured to complete data exchange between the interface boards (where the interface board is also referred to as a line card or a service board).

The main control board 2810 is configured to complete functions such as system management, device maintenance, and protocol processing. The interface board 2830 and the interface board 2840 are configured to: provide various service interfaces (for example, a POS interface, a GE interface, and an ATM interface), and implement packet forwarding. The main control board 2810 mainly includes three types of functional units: a system management and control unit, a system clock unit, and a system maintenance unit. The main control board 2810, the interface board 2830, and the interface board 2840 are connected to a system backplane through a system bus to implement interworking. The interface board 2830 includes one or more processors 2831. The processor 2831 is configured to: control and manage the interface board 2830, and communicate with a central processing unit 2812 on the main control board 2810. A memory 2832 on the interface board 2830 is configured to store a flexible algorithm and the like. The interface board 2830 includes one or more network interfaces 2833, configured to receive and send a packet. A specific implementation process is not described herein again. As shown in FIG. 28, the main control board 2810 further includes a memory 2814. The memory 2814 is configured to store system management information, a protocol, and the like. This is not limited in embodiments of this application.

As shown in FIG. 28, this embodiment includes a plurality of interface boards and uses a distributed forwarding mechanism. In this mechanism, an operation on the interface board 2840 is basically similar to an operation on the interface board 2830. For example, the interface board 2840 includes one or more network interfaces 2843, to be configured to receive and send the packet; includes a memory 2842, to be configured to store the flexible algorithm; and includes a processor 2841, to be configured to: control and manage the interface board 2840, and communicate with the central processing unit 2812 on the main control board 2810. For brevity, the interface board 2840 is not described herein again.

The processor 2831 in the interface board 2830 and/or the processor 2841 in the interface board 2840 in FIG. 28 may be dedicated hardware or a chip, for example, a network processor or an application-specific integrated circuit, to implement the foregoing functions. This implementation manner is usually referred to as a manner of using dedicated hardware or a chip for processing on a forwarding plane. In another implementation, the processor 2831 in the interface board 2830 and/or the processor 2841 in the interface board 2840 may alternatively use a general-purpose processor, for example, a CPU.

In addition, it should be noted that there may be one or more main control boards. When there are a plurality of main control boards, the main control boards may include an active main control board and a standby main control board. There may be one or more interface boards. A network device with a stronger data processing capability provides a larger quantity of interface boards. In a case of a plurality of interface boards, the plurality of interface boards may communicate with each other through one or more switch fabric units, and load sharing and redundancy backup may be implemented by the plurality of interface boards together. In a centralized forwarding architecture, the network device may not need the switch fabric unit, and the interface board performs a function of processing service data of an entire system. In a distributed forwarding architecture, the network device includes a plurality of interface boards, data exchange between the plurality of interface boards may be implemented by using the switch fabric unit, and a large-capacity data exchange and processing capability is provided. Therefore, a data access and processing capability of a network device in the distributed architecture is better than that of a network device in the centralized architecture. A specific architecture to be used depends on a networking deployment scenario, and is not limited herein.

In an optional implementation, the memory 2832 and/or the memory 2842 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, optical disc storage (including a compressed optical disc, a laser disc, an optical disc, a digital versatile optical disc, a Blu-ray disc, and the like), a magnetic disk or another magnetic storage device, or any other medium that can be used to carry or store expected program code in a form of instructions or a data structure and that can be accessed by a computer. However, the memory 2832 and/or the memory 2842 are/is not limited thereto. The memory 2832 may exist independently, and is connected to the processor 2831 through a communication bus, or may be integrated with the processor 2831. The memory 2842 may exist independently, and is connected to the processor 2841 through a communication bus, or may be integrated with the processor 2841.

The memory 2832 is configured to store program code, and the processor 2831 controls execution of the program code, to perform some or all of the steps of the method provided in the foregoing embodiments. The processor 2831 is configured to execute the program code stored in the memory 2832. The program code may include one or more software modules. The one or more software modules may be the functional modules provided in the embodiment in FIG. 27. The memory 2842 may alternatively be configured to store the program code, and the processor 2841 controls execution of the program code, to perform some or all of the steps of the method provided in the foregoing embodiments. Similarly, the memory 2814 may alternatively be configured to store program code, and the central processing unit 2812 controls execution of the program code, to perform some or all of the steps of the method provided in the foregoing embodiments.

In an optional implementation, the network interface 2833 and the network interface 2843 may be apparatuses that use any transceiver, and are configured to communicate with another device or a communication network, for example, an Ethernet, a radio access network (radio access network, RAN), or a wireless local area network (wireless local area network, WLAN).

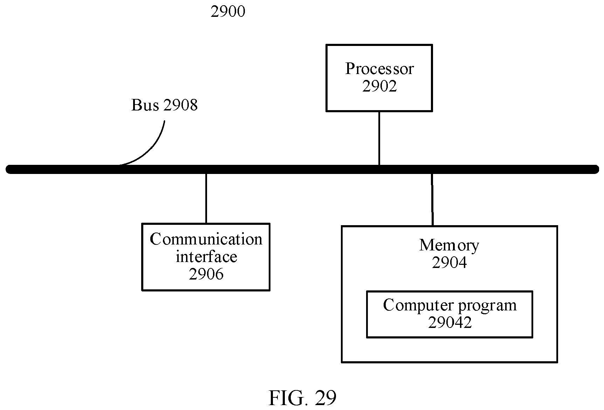

FIG. 29 is a schematic diagram of a structure of another path calculation apparatus 2900 according to an embodiment of this application. The path calculation apparatus 2900 may be a network device, or may be a functional component in the network device. Refer to FIG. 29. The path calculation apparatus 2900 includes a processor 2902, a memory 2904, a communication interface 2906, and a bus 2908. The processor 2902, the memory 2904, and the communication interface 2906 are communicatively connected through the bus 2908. A connection manner between the processor 2902, the memory 2904, and the communication interface 2906 shown in FIG. 29 is merely an example. In an implementation process, the processor 2902, the memory 2904, and the communication interface 2906 may alternatively be connected in a connection manner other than through the bus 2908.

The memory 2904 is configured to store a computer program 29042, and the computer program 29042 may include instructions and data. The memory 2904 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 2902 may be a general-purpose processor. The general-purpose processor may be a processor that reads and executes a computer program (for example, the computer program 29042) stored in a memory (for example, the memory 2904) to perform a specific step and/or operation. In a process of performing the foregoing step and/or operation, the general-purpose processor may use data stored in the memory (for example, the memory 2904). For example, the stored computer program may be executed, to implement a related function of the foregoing processing module 720. The general-purpose processor may be a CPU. The processor 2902 may also be a dedicated processor. The dedicated processor is a processor specially designed to perform a specific step and/or operation. The dedicated processor may be a digital signal processor (digital signal processor, DSP), an ASIC, an FPGA, or the like. The processor 2902 may alternatively be a combination of a plurality of processors, for example, a multi-core processor. The processor 2902 includes at least one circuit, to perform all or some of the steps of the method in the foregoing embodiments.

The communication interface 2906 may include an input/output (input/output, I/O) interface, a physical interface, a logical interface, and another interface that are configured to implement interconnection between components inside the path calculation apparatus 2900, and an interface that is configured to implement interconnection between the path calculation apparatus 2900 and another device (for example, the network device). The physical interface may be a gigabit Ethernet interface (gigabit Ethernet, GE), and may be configured to implement the interconnection between the path calculation apparatus 2900 and another device. The logical interface is an internal interface of the path calculation apparatus 2900, and may be configured to implement the interconnection between components inside the path calculation apparatus 2900. It is easy to understand that the communication interface 2906 may be configured to communicate between the path calculation apparatus 2900 and another device. For example, the communication interface 2906 is configured to send and receive a packet between the path calculation apparatus 2900 and the another device. The communication interface 2906 may implement related functions of the foregoing receiving module 710 and the foregoing sending module 720. The communication interface 2906 may further include a transceiver to receive and send a packet. The transceiver may also implement the related functions of the foregoing receiving module 710 and the foregoing sending module 720.

The bus 2908 may be any type of communication bus, for example, a system bus, configured to implement interconnection among the processor 2902, the memory 2904, and the communication interface 2906.

The foregoing components may be separately disposed on chips that are independent of each other, or at least some or all of the components may be disposed on a same chip. Whether the components are independently disposed on different chips or are integrated on one or more chips usually depends on a requirement of a product design. A specific implementation form of the foregoing components is not limited in embodiments of this application.

The path calculation apparatus 2900 shown in FIG. 29 is merely an example. In an implementation process, the path calculation apparatus 2900 may further include another component. This not listed one by one in this specification. The path calculation apparatus 2900 shown in FIG. 29 calculates a path by performing all or some of the steps of the method provided in the foregoing embodiments.

An embodiment of this application provides a communication system. The communication system includes at least two network devices, and at least one of the at least two network devices includes the path calculation apparatus shown in any one of FIG. 27 to FIG. 29.

Optionally, the communication system is the IGP network shown in FIG. 14.

An embodiment of this application provides a computer-readable storage medium. The computer-readable storage medium stores a computer program. When the computer program is executed (for example, executed by a network device or one or more processors), all or some of the steps of the path calculation method provided in the foregoing method embodiments are implemented.

An embodiment of this application provides a computer program product. The computer program product includes a program or code. When the program or the code is executed (for example, executed by a network device or one or more processors), all or some of the steps of the path calculation method provided in the foregoing method embodiments are implemented.

An embodiment of this application provides a chip. The chip includes a programmable logic circuit and/or program instructions. When running, the chip implements all or some of the steps of the path calculation method provided in the foregoing method embodiments.

In the foregoing embodiments, the "energy consumption information" and the "energy consumption" are used as an example to describe the technical solutions of this application. In some embodiments, the "energy consumption information" may also be referred to as "carbon emission information", and the "energy consumption" may also be referred to as a "carbon emission". For example, energy consumption of a network object may be a carbon emission of the network object, or energy consumption of a network object and a carbon emission of the network object may be mutually converted. The "energy consumption information" in the foregoing embodiments may be replaced with "carbon emission information", and the "energy consumption" in the foregoing embodiments may be replaced with a "carbon emission". After a corresponding description is replaced, the technical solutions provided in the foregoing embodiments are still valid. Therefore, a technical solution described by using the "carbon emission information" or the "carbon emission" that are the same as or similar to the technical concept of this application should also fall within the protection scope of this application.

All or some of the foregoing embodiments may be implemented by using software, hardware, firmware, or any combination thereof. When embodiments are implemented by using the software, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk drive, or a magnetic tape), an optical medium, a semiconductor medium (for example, a solid-state drive), or the like.

It should be understood that in this application, the term "at least one" means one or more, and the term "a plurality of" means two or more than two. In this application, unless otherwise specified, the symbol "/" usually represents "or". For example, A/B represents A or B. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be cross-referenced. This is not limited in embodiments of this application. A sequence of operations in the method embodiments provided in embodiments of this application can be properly adjusted, and the operations operation can be correspondingly added or deleted based on a situation. Any variation method that can be readily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the described apparatus embodiment is merely an example. For example, division into the units is merely logical function division and may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or another form.

Units described as separate parts may or may not be physically separate, and parts described as units may or may not be physical units, may be located in one position, or may be distributed on a plurality of network devices. Some or all of the units may be selected based on an actual requirement to achieve the objectives of the solutions of embodiments.

The foregoing descriptions are merely example implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A path calculation method, applied to a first network device in an interior gateway protocol IGP network, wherein the method comprises:
receiving, by the first network device, a first IGP packet sent by a second network device, wherein the first IGP packet comprises energy consumption information of a network object in the IGP network, and the energy consumption information of the network object comprises energy consumption of the network object; and
determining, by the first network device, an optimal path from the first network device to a first egress device based on the energy consumption information of the network object in the IGP network, wherein the first egress device is an egress network device in the IGP network.

2. The method according to claim 1, wherein
the network object comprises at least one of a network device in the IGP network and a link in the IGP network.

3. The method according to claim 2, wherein
energy consumption of the network device in the IGP network is determined based on at least one of the following factors: a processing component in the network device, a temperature adjustment component in the network device, and an environment in which the network device is located; and
energy consumption of the link in the IGP network is determined based on at least one of the following factors: a network processor NP chip corresponding to the link, an optical-electrical conversion chip corresponding to the link, and a serial interface corresponding to the link.

4. The method according to any one of claims 1 to 3, wherein
the energy consumption information of the network object further comprises status information of the network object, wherein the status information indicates a status of the network object, and the status of the network object comprises a sleep state or a wake-up state.

5. The method according to any one of claims 1 to 4, wherein the determining, by the first network device, an optimal path from the first network device to a first egress device based on the energy consumption information of the network object in the IGP network comprises:
determining, by the first network device, the optimal path from the first network device to the first egress device based on the energy consumption information of the network object in the IGP network, a first flexible algorithm, and a network topology of the IGP network.

6. The method according to claim 5, wherein the determining, by the first network device, the optimal path from the first network device to the first egress device based on the energy consumption information of the network object in the IGP network, a first flexible algorithm, and a network topology of the IGP network comprises:
determining, by the first network device, a pruned network topology based on the energy consumption information of the network object in the IGP network, a metric type of the first flexible algorithm, constraints of the first flexible algorithm, and the network topology of the IGP network; and
determining, by the first network device, the optimal path from the first network device to the first egress device based on energy consumption information of a network object in the pruned network topology, a calculation type of the first flexible algorithm, the metric type of the first flexible algorithm, and the pruned network topology.

7. The method according to claim 5 or 6, wherein
the first flexible algorithm meets at least one of the following:
the metric type of the first flexible algorithm comprises an energy consumption metric; and
the constraints of the first flexible algorithm comprise an energy consumption constraint condition.

8. The method according to claim 7, wherein
the energy consumption constraint condition comprises at least one of a device energy consumption constraint condition and a link energy consumption constraint condition;
the device energy consumption constraint condition comprises: excluding a network device that does not meet a device energy consumption condition; and
the link energy consumption constraint condition comprises: excluding a link that does not meet a link energy consumption condition.

9. The method according to claim 8, wherein
the device energy consumption constraint condition comprises at least one of the following: excluding a network device whose energy consumption is greater than a device energy consumption threshold, and excluding a network device in the sleep state; and
the link energy consumption constraint condition comprises at least one of the following: excluding a link whose energy consumption is greater than a link energy consumption threshold, and excluding a link in the sleep state.

10. The method according to any one of claims 1 to 9, wherein the method further comprises:
determining, by the first network device, that a device sleep condition is met, and entering, by the first network device, the sleep state; and
sending, by the first network device, a second IGP packet to the IGP network, wherein the second IGP packet carries device sleep state information, and the device sleep state information indicates that the first network device is in the sleep state, wherein
the device sleep condition comprises at least one of the following: a device sleep moment is reached, and a ratio of energy consumption of the first network device to traffic of the first network device reaches a device sleep threshold.

11. The method according to claim 10, wherein the method further comprises:
determining, by the first network device, that a device wake-up condition is met, and entering, by the first network device, the wake-up state; and
sending, by the first network device, a third IGP packet to the IGP network, wherein the third IGP packet carries device wake-up state information, and the device wake-up state information indicates that the first network device is in the wake-up state, wherein
the device wake-up condition comprises at least one of the following: a device wake-up moment is reached, and the ratio of the energy consumption of the first network device to the traffic of the first network device reaches a device wake-up threshold.

12. The method according to any one of claims 1 to 11, wherein the method further comprises:
determining, by the first network device, that a link sleep condition is met, and controlling, by the first network device, a first link to enter the sleep state, wherein the first link is a link controlled by the first network device; and
sending, by the first network device, a fourth IGP packet to the IGP network, wherein the fourth IGP packet carries link sleep state information, and the link sleep state information indicates that the first link is in the sleep state, wherein
the link sleep condition comprises at least one of the following: a link sleep moment is reached, and a ratio of energy consumption of the first link to traffic of the first link reaches a link sleep threshold.

13. The method according to claim 12, wherein the method further comprises:
determining, by the first network device, that a link wake-up condition is met, and controlling, by the first network device, the first link to enter the wake-up state; and
sending, by the first network device, a fifth IGP packet to the IGP network, wherein the fifth IGP packet carries link wake-up state information, and the link wake-up state information indicates that the first link is in the wake-up state, wherein
the link wake-up condition comprises at least one of the following: a link wake-up moment is reached, and the ratio of the energy consumption of the first link to the traffic of the first link reaches a link wake-up threshold.

14. A path calculation apparatus, used in a first network device in an interior gateway protocol IGP network, wherein the apparatus comprises:
a receiving module, configured to receive a first IGP packet sent by a second network device, wherein the first IGP packet comprises energy consumption information of a network object in the IGP network, and the energy consumption information of the network object comprises energy consumption of the network object; and
a processing module, configured to determine an optimal path from the first network device to a first egress device based on the energy consumption information of the network object in the IGP network, wherein the first egress device is an egress network device in the IGP network.

15. The apparatus according to claim 14, wherein
the network object comprises at least one of a network device in the IGP network and a link in the IGP network.

16. The apparatus according to claim 15, wherein
energy consumption of the network device in the IGP network is determined based on at least one of the following factors: a processing component in the network device, a temperature adjustment component in the network device, and an environment in which the network device is located; and
energy consumption of the link in the IGP network is determined based on at least one of the following factors: a network processor NP chip corresponding to the link, an optical-electrical conversion chip corresponding to the link, and a serial interface corresponding to the link.

17. The apparatus according to any one of claims 14 to 16, wherein
the energy consumption information of the network object further comprises status information of the network object, wherein the status information indicates a status of the network object, and the status of the network object comprises a sleep state or a wake-up state.

18. The apparatus according to any one of claims 14 to 17, wherein
the processing module is configured to determine the optimal path from the first network device to the first egress device based on the energy consumption information of the network object in the IGP network, a first flexible algorithm, and a network topology of the IGP network.

19. The apparatus according to claim 18, wherein the processing module is configured to:
determine a pruned network topology based on the energy consumption information of the network object in the IGP network, a metric type of the first flexible algorithm, constraints of the first flexible algorithm, and the network topology of the IGP network; and
determine the optimal path from the first network device to the first egress device based on energy consumption information of a network object in the pruned network topology, a calculation type of the first flexible algorithm, the metric type of the first flexible algorithm, and the pruned network topology.

20. The apparatus according to claim 18 or 19, wherein
the first flexible algorithm meets at least one of the following:
the metric type of the first flexible algorithm comprises an energy consumption metric; and
the constraints of the first flexible algorithm comprise an energy consumption constraint condition.

21. The apparatus according to claim 20, wherein
the energy consumption constraint condition comprises at least one of a device energy consumption constraint condition and a link energy consumption constraint condition;
the device energy consumption constraint condition comprises: excluding a network device that does not meet a device energy consumption condition; and
the link energy consumption constraint condition comprises: excluding a link that does not meet a link energy consumption condition.

22. The apparatus according to claim 21, wherein
the device energy consumption constraint condition comprises at least one of the following: excluding a network device whose energy consumption is greater than a device energy consumption threshold, and excluding a network device in the sleep state; and
the link energy consumption constraint condition comprises at least one of the following: excluding a link whose energy consumption is greater than a link energy consumption threshold, and excluding a link in the sleep state.

23. The apparatus according to any one of claims 14 to 22, wherein
the processing module is further configured to: determine that a device sleep condition is met, and control the first network device to enter the sleep state; and
the apparatus further comprises a sending module, configured to send a second IGP packet to the IGP network, wherein the second IGP packet carries device sleep state information, and the device sleep state information indicates that the first network device is in the sleep state, wherein
the device sleep condition comprises at least one of the following: a device sleep moment is reached, and a ratio of energy consumption of the first network device to traffic of the first network device reaches a device sleep threshold.

24. The apparatus according to claim 23, wherein
the processing module is further configured to: determine that a device wake-up condition is met, and control the first network device to enter the wake-up state; and
the sending module is further configured to send a third IGP packet to the IGP network, wherein the third IGP packet carries device wake-up state information, and the device wake-up state information indicates that the first network device is in the wake-up state, wherein
the device wake-up condition comprises at least one of the following: a device wake-up moment is reached, and the ratio of the energy consumption of the first network device to the traffic of the first network device reaches a device wake-up threshold.

25. The apparatus according to any one of claims 14 to 24, wherein
the processing module is further configured to: determine that a link sleep condition is met, and control a first link to enter the sleep state, wherein the first link is a link controlled by the first network device; and
the apparatus further comprises the sending module, configured to send a fourth IGP packet to the IGP network, wherein the fourth IGP packet carries link sleep state information, and the link sleep state information indicates that the first link is in the sleep state, wherein
the link sleep condition comprises at least one of the following: a link sleep moment is reached, and a ratio of energy consumption of the first link to traffic of the first link reaches a link sleep threshold.

26. The apparatus according to claim 25, wherein
the processing module is further configured to: determine that a link wake-up condition is met, and control the first link to enter the wake-up state; and
the sending module is further configured to send a fifth IGP packet to the IGP network, wherein the fifth IGP packet carries link wake-up state information, and the link wake-up state information indicates that the first link is in the wake-up state, wherein
the link wake-up condition comprises at least one of the following: a link wake-up moment is reached, and the ratio of the energy consumption of the first link to the traffic of the first link reaches a link wake-up threshold.

27. A path calculation apparatus, comprising a memory and a processor, wherein
the memory is configured to store a computer program; and
the processor is configured to execute the computer program stored in the memory, to enable the path calculation apparatus to perform the path calculation method according to any one of claims 1 to 13.

28. A communication system, wherein the communication system comprises at least two network devices, and at least one of the at least two network devices comprises the path calculation apparatus according to any one of claims 14 to 27.

29. A computer-readable storage medium, wherein the computer-readable storage medium stores a computer program, and when the computer program is executed, the path calculation method according to any one of claims 1 to 13 is implemented.

30. A computer program product, wherein the computer program product comprises a program or code, and when the program or the code is executed, the path calculation method according to any one of claims 1 to 13 is implemented.
